(19) Europäisches Patentamt
European Patent Office
Office européen des brevets

(11) **EP 2 821 935 B1**

(12) **EUROPEAN PATENT SPECIFICATION**

(45) Date of publication and mention
of the grant of the patent:
**27.11.2019 Bulletin 2019/48**

(51) Int Cl.:
**G06K 9/00** $^{(2006.01)}$     **G06K 9/46** $^{(2006.01)}$
**G06T 7/00** $^{(2017.01)}$

(21) Application number: **14174203.1**

(22) Date of filing: **26.06.2014**

(54) **Vehicle detection method and device**

Verfahren zur Fahrzeugerfassung und Vorrichtung

Procédé et dispositif de détection de véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2013 CN 201310271915**

(43) Date of publication of application:
**07.01.2015 Bulletin 2015/02**

(73) Proprietor: **Ricoh Company, Ltd.**
**Tokyo 143-8555 (JP)**

(72) Inventors:
• **He, Na**
100044 Beijing (CN)
• **Hu, Ping**
100044 Beijing (CN)
• **Shi, Zhongchao**
100044 Beijing (CN)
• **Lu, Yaojie**
100044 Beijing (CN)
• **Wang, Gang**
100044 Beijing (CN)

(74) Representative: **SSM Sandmair**
**Patentanwälte Rechtsanwalt**
**Partnerschaft mbB**
**Joseph-Wild-Straße 20**
**81829 München (DE)**

(56) References cited:
**US-B1- 7 227 893**

• **BROGGI A ET AL: "Multi-resolution vehicle detection using artificial vision", INTELLIGENT VEHICLES SYMPOSIUM, 2004 IEEE PARMA, ITALY JUNE 14-17, 2004, PISCATAWAY, NJ, USA,IEEE, 14 June 2004 (2004-06-14), pages 310-314, XP010727487, DOI: 10.1109/IVS.2004.1336400 ISBN: 978-0-7803-8310-4**
• **KUEHNLE A ED - CALDERARA SIMONE ET AL: "SYMMETRY-BASED RECOGNITION OF VEHICLE REARS", PATTERN RECOGNITION LETTERS, ELSEVIER, AMSTERDAM, NL, vol. 12, no. 4, 1 April 1991 (1991-04-01), pages 249-258, XP008107374, ISSN: 0167-8655, DOI: 10.1016/0167-8655(91)90039-O [retrieved on 2004-08-25]**
• **CHUNG-HEE LEE: "Stereo vision-based vehicle detection using a road feature and disparity histogram", OPTICAL ENGINEERING, vol. 50, no. 2, 1 February 2011 (2011-02-01), page 027004, XP055049146, ISSN: 0091-3286, DOI: 10.1117/1.3535590**

**Description**

BACKGROUND OF THE INVENTION

1. Field of the Invention

The present invention relates to image processing, and particularly relates to a vehicle detection method and device based on image processing.

2. Description of the Related Art

A driver assistance system has been widely used so far. In general, this kind of driver assistance system is installed in a vehicle, and includes an image capture device and/or a detection device. For example, by analyzing an image captured by the image capture device, it is possible to provide useful information to a driver.

According to statistics, a driver is mainly affected by another vehicle when he drives. As a result, in an automated driver assistance system, robust and reliable vehicle detection plays a very important role. Accurate vehicle detection is good for the follow-on vehicle recognition, vehicle tracking, etc.

Up to now, techniques for detecting a vehicle by utilizing the image processing based on a symmetrical feature of the vehicle have been developed.

In U.S. Patent Application Publication No. 2009/0110286 A1, a detection method of detecting a kind of symmetrical object whose shape is given is disclosed. In this method, the symmetry is obtained by comparing a gradient vector with a line.

Furthermore, in U.S. Patent No. 6842531 B2, a vehicle area determination method is disclosed in which vehicle detection is performed in a candidate area having a high vehicle existence probability value. In this method, the vehicle detection is conducted by employing a horizontal symmetry evaluator, a variance evaluator, a lower-area mean gradation evaluator, and an area determining unit.

BROGGI A ET AL: "Multi-resolution vehicle detection using artificial version", INTELLIGENT VEHICLES SYMPOSIUM, 2004, IEEE PARMA, ITALY JUNE 14-17, 2004, PISCATAWAY, NJ USA, IEEE, 14 June 2004 (2004-06-14), pages 310-314, XP010727487, DOI: 10.1109/IVS.2004.1336400, ISBN: 978-0-7803-8310-4 discloses to determine an image region providing some kind of symmetry, without investigating verification if said region indeed represents the contour of a vehicle. Rather, that document assumes that the left and right location of a bounding box, having a defined width and the symmetry axis as its centerline, coincide with the left and right contour of a vehicle. However, symmetric regions other than vehicles might be detected or the vehicle might not be detected in its entire width.

KUEHNLE A ED - CALDERARA SIMONE ET AL: "SYMMETRY-BASED RECOGNITION OF VEHICLES REARS", PATTERN RECOGNITION LETTERS, ELSEVIER, AMSTERDAM, NL, vol. 12, no. 4, 1 April 1991 (1991-01-01), pages 249-258, XP008107374, ISSN: 0167-8655, DOI: 10.1016/0167-8655(91)90093-O [retrieved on 2004-08-25] discloses a method of vehicle detection based on three different symmetry calculations, i.e. contour symmetry, horizontal line length and gray level symmetry. Each of said symmetry calculations results in a histogram representation from which a local maximum is determined as a symmetry axis representing the vehicle centerline. Then, starting from said symmetry axis, the horizontal edges are followed to the outmost bounds in the left and right direction. Said outmost bounds are assumed to represent the left and right contour of the vehicle without providing any corresponding verification.

US 7,227,893 B1 discloses use of symmetry calculation for the detection of any kind of symmetrical object. Symmetry values are calculated for a column or a row as the ratio of vertical or horizontal edge pixels on both sides of a centerline.

Chung-Hee Lee: "Stereo vision-based vehicle detection using a road feature and disparity histogram", Optical Engineering, vol. 50, no. 2, 1 February 2011 (2011-02-01), page 027004, XP055049146, ISSN: 0091-3286, DOI: 10.1117/1.3535590 discloses a method using the disparity map for vehicle detection. However, that method does not use symmetrical disparity features. In contrast, disparity histograms are used for image segmentation, but not for edge feature detection.

SUMMARY OF THE INVENTION

The invention is defined by the independent claims. The dependent claims relate to preferred embodiments of the invention.

By utilizing the above-described method and device, it is possible to more accurately detect a vehicle according to an actual situation because, as for each column, a vehicle width range related to the corresponding column is determined, and the symmetry of the corresponding column is determined on the basis of the vehicle width range related to the corresponding column. In addition, when the symmetry of the corresponding column is calculated, on the basis of the features of a vehicle in a binary horizontal edge image, a binary vertical edge image and a corresponding disparity map, the region-based symmetry in the binary horizontal edge image, the right-and-left vertical edge-based symmetry of a possible vehicle in the corresponding disparity map and the degree of existence of the right and left edges of a vehicle in the binary vertical edge image are comprehensively considered. As a result, it is possible to more properly calculate the symmetry of the corresponding column and to apply the calculated symmetry of the corresponding column to the vehicle detection, so that it is possible to obtain a detection result which is more accurate and is more robust against noise.

## BRIEF DESCRIPTION OF THE DRAWINGS

FIG. 1 is a block diagram of a first vehicle detection system;
FIG. 2 is a block diagram of a vehicle detection device used in the first vehicle detection system shown in FIG. 1;
FIG. 3 is a flowchart of a vehicle detection method;
FIG. 4 illustrates comparison of results obtained by carrying out edge detection, binary image processing, and alternate processing on the basis of a grayscale image, respectively;
FIGS. 5A and 5B illustrate installation of a stereo camera and vehicle width calculation based on horizontal projection, respectively;
FIG. 6 is a flowchart of a process of calculating the symmetry of a column with respect to a width located within a vehicle width range;
FIGS. 7A, 7B and 7C illustrate data related to a width in a binary horizontal edge image, a binary vertical edge image, and a disparity map, respectively;
FIGS. 8A and 8B illustrate the symmetries of a column with respect to various widths in a binary horizontal edge image;
FIG. 9 illustrates a result of performing filtering on each value representing symmetry in FIG. 8B;
FIG. 10 is a flowchart of a vehicle detection process based on the symmetry of each column;
FIG. 11 is a flowchart of a process of locating a symmetry axis of a vehicle based on the symmetry of each column;
FIG. 12 illustrates a result of locating a symmetry axis of a vehicle;
FIG. 13 is a flowchart of a process of locating the right and left positions of a vehicle;
FIG. 14 illustrates a result of locating the right and left positions of a vehicle;
FIG. 15 is a flowchart of a process of locating the bottom and top positions of a vehicle;
FIG. 16 illustrates a result of locating the bottom and top positions of a vehicle;
FIG. 17 illustrates a result of performing post-processing on detected vehicles;
FIG. 18 is a block diagram of a second vehicle detection system; and
FIG. 19 is a block diagram of a third vehicle detection system.

## DETAILED DESCRIPTION OF THE PREFERRED EMBODIMENTS

In order to let those people skilled in the art better understand the present invention, hereinafter the present invention will be concretely described on the basis of the drawings and various embodiments.

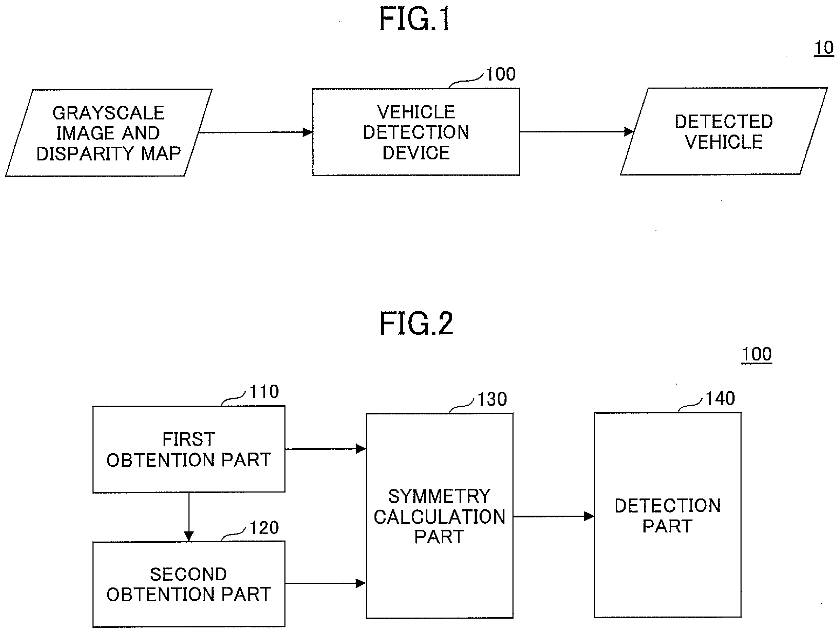

FIG. 1 is a block diagram of a first vehicle detection system 10 according to an embodiment of the present invention.

As shown in FIG. 1, a grayscale image and a disparity map corresponding to the grayscale image are input into a vehicle detection device 100. The grayscale image and the disparity map may be captured by, for example, a twin-lens camera installed in a vehicle. After the grayscale image and the disparity map are input into the vehicle detection device 100, the vehicle detection device 100 outputs a vehicle detection result. The vehicle detection result may be output in various forms. For example, the vehicle detection result may be output in a visible form (for example, may be output to a display unit), in an audible form (for example, may be output to a speaker), or in a readable form (for example, may be output as text).

Here it should be noted that although FIG. 1 shows that the grayscale image and disparity map are input into the vehicle detection device 100, it is also possible to input right and left images captured by, for example, a twin-lens camera into the vehicle detection device 100. In this case, for example, the left image may be used as a grayscale image, and a disparity map corresponding to the grayscale image may be obtained on the basis of the right and left images.

FIG. 2 is a block diagram of the vehicle detection device 100 used in the first vehicle detection system 10 shown in FIG. 1.

As shown in FIG. 2, the vehicle detection device 100 may include a grayscale image and disparity map obtention part (hereinafter, called a "first obtention part") 110, a horizontal edge image and vertical edge image obtention part (hereinafter, called as a "second obtention part") 120, a symmetry calculation part 130, and a detection part 140.

The first obtention part 110 is configured to obtain a grayscale image and a disparity map corresponding to the grayscale image.

The second obtention part 120 is configured to detect horizontal and vertical edges in the grayscale image as well as to perform binary image processing so as to obtain binary horizontal and vertical edge images, respectively. It should be noted that in the obtained binary horizontal and vertical edge images, one value, for example, 1 may be used to represent a pixel belonging to an edge, and another value, for example, 0 may be used to represent a pixel not belonging to an edge.

The symmetry calculation part 130 is configured to calculate, on the basis of the binary horizontal edge image, the binary vertical edge image and the disparity map, the symmetry of each column. The symmetry of the corresponding column with respect to at least one first width located within a vehicle width range in an image, related to the corresponding column is calculated on the basis of the region-based symmetry in the binary horizontal edge image, the right-and-left vertical edge-based symmetry of a possible vehicle in the disparity map and the degree of existence of the right and left edges of a vehicle in the binary vertical edge image, and then the symmetry of the corresponding column is calculated on the basis of the symmetry of the corresponding column with respect to the at least one first width.

The detection part 140 configured to detect a vehicle on the basis of the calculated symmetry of each column.

Here it should be noted that the above-described parts of the vehicle detection device 100 may be achieved by utilizing a software program. For example, it is possible to achieve them by utilizing a combination of a general-purpose computer including a central processing unit (CPU), a random access memory (RAM), a read-only memory (ROM), etc., and a software program capable of being executed in the general-purpose computer. The software program may be stored in a storage medium such as a flash memory, a floppy disk, a hard disk, and an optical disk, and may be loaded in, for example, a RAM for execution. Furthermore, instead of the combination of the general-purpose computer and the software program, it is also possible to use a combination of a dedicated integrated circuit (IC) and the software program to achieve the above-described parts of the vehicle detection device 100. The indicated IC may include at least one of a micro-processor unit (MPU), a digital signal processor (DSP), a field-programmable gate array (FPGA), an application-specific integrated circuit (ASIC). This kind of general-purpose computer or indicated IC may be installed in, for example, a vehicle, and may carry out communications with an imaging device, for example, a camera installed in the vehicle for forming images of a road and an object related to the road. In this way, it is possible to perform analysis on a 2-dimensional image and/or stereo image captured by the camera so as to detect a vehicle. Moreover, the above-described parts of the vehicle detection device 100 may be achieved by specific hardware, for example, a specific FPGA or IC. In addition, the above-described parts of the vehicle detection device 100 may also be achieved by a combination of software and hardware.

It should also be noted that the structure of each of the above-described parts of the vehicle detection device 100 and the number of the above-described parts are not used to limit the present invention. According to an embodiment of the present invention, the first obention part 110, the second obtention part 120, the symmetry calculation part 130, and the detection part 140 may be combined as an independent part capable of achieving the corresponding functions and operations. Alternatively, each of the first obtention part 110, the second obtention 120, the symmetry calculation part 130, and the detection part 140 may be divided into plural sub-parts for achieving the corresponding function and operation.

Additionally, it should be noted that the vehicle detection device 100 is not exclusive to what FIG. 2 shows. That is to say, the vehicle detection device 100 may include, for example, a display part for displaying the detection result of the vehicle detection part 140, or may include, for example, a communications part for transmitting the related information (for example, the detection result) to the outside.

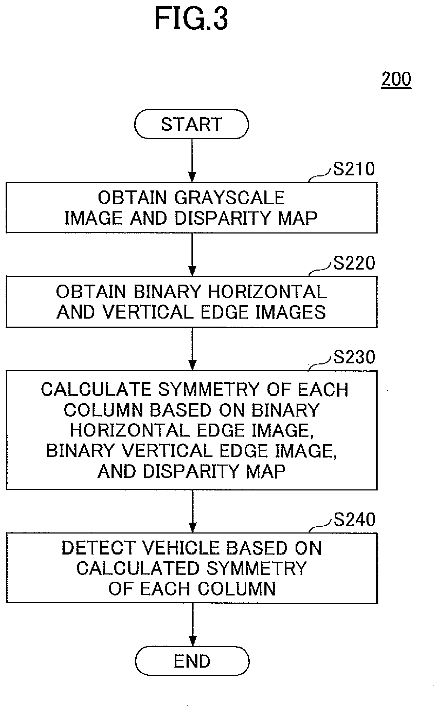

In what follows, a vehicle detection method according to an embodiment of the present invention is described on the basis of FIG. 3. FIG. 3 is a flowchart of a vehicle detection method 200.

The steps of the vehicle detection method 200 shown in FIG. 3 may be carried out by the corresponding parts shown in FIG. 2. In other words, STEP S210 may be carried out by the first obtention part 110, STEP S220 may be carried out by the second obtention part 120, STEP S230 may be carried out by the symmetry calculation part 130, and STEP 240 may be carried out by the detection part 140.

As shown in FIG. 3, in STEP S210, a grayscale image and a disparity map corresponding to the grayscale image are obtained.

It is possible to adopt any proper conventional method to obtain the grayscale image and disparity map. For example, a twin-lens camera, a multi-lens camera, or a stereo camera mounted in a vehicle may be employed to acquire the grayscale image, and then the disparity map may be obtained by carrying out calculation. In particular, for example, it is possible to use a twin-lens camera mounted in a vehicle to capture right and left images. In this case, for example, the right image (or the left image) may serve as a grayscale image, and a disparity map corresponding to the grayscale image may be obtained on the basis of the right and left images.

Here, in an example, a vehicle detection device like the vehicle detection device 100 shown in FIG. 2 may be mounted in a vehicle, and it is possible to utilize a camera installed in the vehicle to locally obtain a grayscale image and disparity map. In another example, it is also possible to remotely obtain a grayscale image and disparity map via a wired or wireless network.

Furthermore, in STEP S210, horizontal and vertical edges in the grayscale image are detected, and by carrying out binary image processing, binary horizontal and vertical edge images are obtained, respectively. In the obtained binary horizontal and vertical edge images, one value, for example, 1 is used to refer to a pixel belonging to an edge, and another value, for example, 0 is used to refer to a pixel not belonging to an edge.

The purpose of this step is to obtain the binary horizontal and vertical edge images. In general, a vehicle has obvious horizontal and vertical edges. As a result, it is possible to embody, by utilizing the binary horizontal and vertical edge images, these kinds of edges of a vehicle in the binary horizontal and vertical edge images.

In an example, the Sobel operator may be used to obtain the horizontal and vertical edges in the grayscale image. Here it should be noted that for more information about the Sobel operator, it is possible to refer to a paper entitled "Asymptotic Confidence Intervals for Indirect Effects in Structural Equation Models", written by Michael E. Sobel, and published in "Sociological Methodology" in 1982.

Furthermore, in the binary image processing, a fixed threshold value, for example, 30 (a grayscale level) or a self-adaptive threshold value may be adopted. In the latter case, for example, it is possible to refer to a paper entitled "A Threshold Selection Method from Gray-level Histograms", written by N. Otsu, and published on "Automatica" in 1975.

In the binary horizontal and vertical edge images, in general, a white pixel refers to an edge pixel, and a black pixel refers to a non-edge pixel. However, it should be understood that a black pixel may also be used to refer to an edge pixel, and a white pixel may also be used to refer to a non-edge pixel. In what follows, for the sake of convenience, a white pixel is used to refer to an edge pixel, and a black pixel is used to refer to a non-edge pixel.

Preferably, in an example, alternate processing is carried out with respect to the binary horizontal and vertical edge images so as to obtain first and second images, respectively. The first image is obtained by only retaining pixels that are edge pixels in the binary horizontal edge image and are non-edge pixels in the binary vertical edge image. The second image is obtained by only retaining pixels that are edge pixels in the binary vertical edge image and are non-edge pixels in the binary horizontal edge image. In other words, in the binary horizontal edge image, pixels that are white in both the binary horizontal edge image and the binary vertical edge image are changed to black. In the binary vertical edge image, pixels that are white in both the binary horizontal edge image and the binary vertical edge image are changed to black too. In this way, the first and second images are obtained. The obtained first and second images serve as binary horizontal and vertical edge images after the alternate processing. Compared to the binary horizontal and vertical edge images before the alternate processing, the binary horizontal and vertical edge images after the alternate processing include purer horizontal and vertical edges. In this way, it is possible to reduce the influence caused by noise in the follow-on steps such as a symmetry calculation step S230 in FIG. 3.

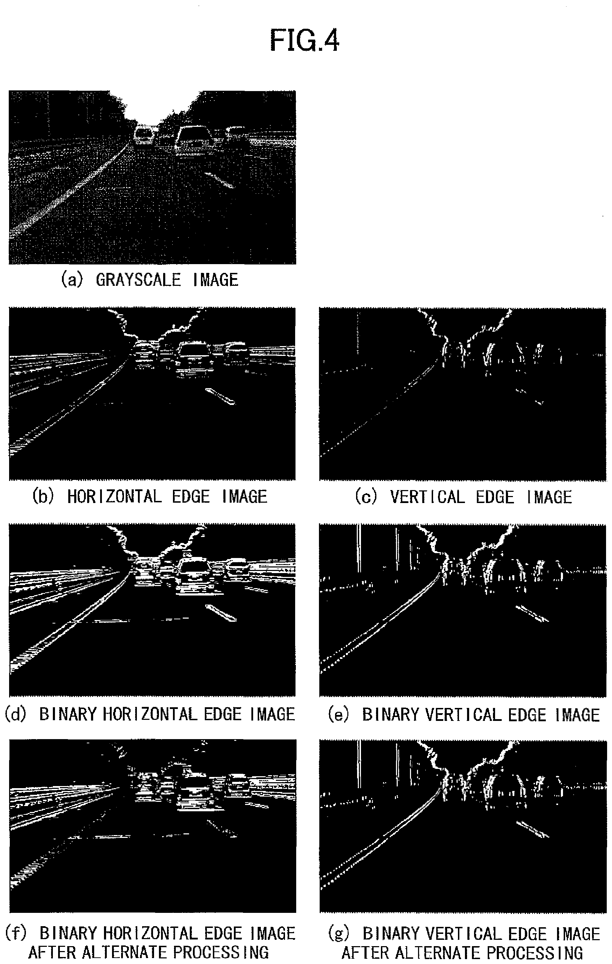

FIG. 4 illustrates comparison of results obtained by carrying out edge detection, binary image processing, and alternate processing on the basis of a grayscale image, respectively.

In FIG. 4, (a) represents a grayscale image; (b) represents a horizontal edge image obtained by utilizing the Sobel operator; (c) represents a vertical edge image obtained by utilizing the Sobel operator; (d) represents a binary horizontal edge image before the alternate processing; (e) represents a binary vertical edge image before the alternate processing; (f) represents a binary horizontal edge image after the alternate processing; and (g) represents a binary vertical edge image after the alternate processing.

By comparing the binary horizontal edge image (f) after the alternate processing and the binary horizontal edge image (d) before the alternate processing, it is obvious that by carrying out the alternate processing, it is possible to dramatically decrease the number of horizontal edge pixels representing, for example, a road shoulder, a fence, or a tree extending obliquely in the grayscale image. In this way, it is possible to dramatically reduce the influence caused by noise in the follow-on steps such as the symmetry calculation step S230 in FIG. 3.

Here referring to FIG. 3 again; in STEP S230, the symmetry of each column is calculated on the basis of the binary horizontal edge image, the binary vertical edge image, and the disparity map. In particular, as for each column, the symmetry of the corresponding column with respect to at least one first width located within a vehicle width range in an image, related to the corresponding column is calculated on the basis of the region-based symmetry in the binary horizontal edge image, the right-and-left vertical edge-based symmetry in the disparity map, and the degree of existence of the right and left edges of a vehicle in the binary vertical edge image. After that, the symmetry of the corresponding column is calculated on the basis of the symmetry of the corresponding column with respect to the at least one first width.

The main idea of STEP S230 is as follows.

(1) As for each column, a vehicle width range in an image, related to the corresponding column itself is determined, so that it is possible to more accurately detect a vehicle with respect to the corresponding column (here it should be noted that in the conventional techniques, a fixed vehicle width range is always used). In general, since the distances between vehicles being captured by cameras (for example, vehicle mounted cameras) and the cameras are different, the sizes of the vehicles in the captured images are different too. That is to say, if a vehicle is near a camera, then the size of this vehicle in its corresponding captured image is relatively large, and if a vehicle is far away from the camera, then the size of this vehicle in its corresponding captured image is relatively small. As a result, when calculating the symmetry of each column in an image for vehicle detection, it is necessary to take into account the vehicle width range related to the corresponding column.

(2) As for each column, when calculating the symmetry of the corresponding column with respect to at least one first width located within a vehicle width range in an image, related to the corresponding column, three factors, namely, the region-based symmetry in a binary horizontal edge image (hereinafter, called "FACTOR 1"), the right-and-left vertical edge-based symmetry in a disparity map (hereinafter, called "FACTOR 2"), and the degree of existence of the right and left edges of a vehicle in a binary vertical edge image (hereinafter, called "FACTOR 3") are taken into account. The reason is that, in general, the region-based symmetry of a vehicle in a binary horizontal edge image is most obvious. As a result, in this symmetry calculation, the region-based symmetry of a vehicle in a binary horizontal edge image (FACTOR 1) is mainly taken into account; at the same time, the right-and-left vertical edge-base symmetry of a vehicle in a disparity map (FACTOR 2) as well as the degree of existence of the right and left edges of a vehicle in a binary vertical edge image (FACTOR 3) are taken into account too. In addition, regarding FACTOR 2 and FACTOR 3, since in general, the right and left edges of a vehicle in the binary vertical edge image cannot be completely obtained, i.e., the calculated right-and-left vertical edge-based symmetry of a vehicle in a disparity map is not good, and because the existence of the right and left edges of a vehicle in a binary vertical edge image may reflect the existence of the vehicle, FACTOR 3 is considered more important than FACTOR 2 in this symmetry calculation.

Here it should be noted that in this specification, the so-called "region-base symmetry" refers to the symmetry of a region with respect to its central vertical axis; the so-called "right-and-left vertical edge-base symmetry" refers to the symmetry of the right and left vertical edges with respect to a vertical axis located between the two; and the so-called "degree of existence of the right and left edges of a vehicle" refers to the probability of existence of the right and left edges of the vehicle.

In addition, the so-called "each column" refers to each column which is formed by pixels and whose width is one pixel; refers to respective columns separated from each other using a fixed gap; or refers to respective columns separated from each other using different gaps.

In what follows, an example is given for illustration of how to determine, as for each column, a vehicle width range related to the corresponding column itself.

In a case where the distance between a camera and an object being captured by the camera is given, there is a certain conversion relationship between the actual physical size of the object and the size of the object in a corresponding image. Furthermore, the distance between the object and the camera is expressed by a disparity value. As a result, on the basis of the disparity value of the object and the actual physical size of the object, it is possible to calculate the size of the object in the corresponding image.

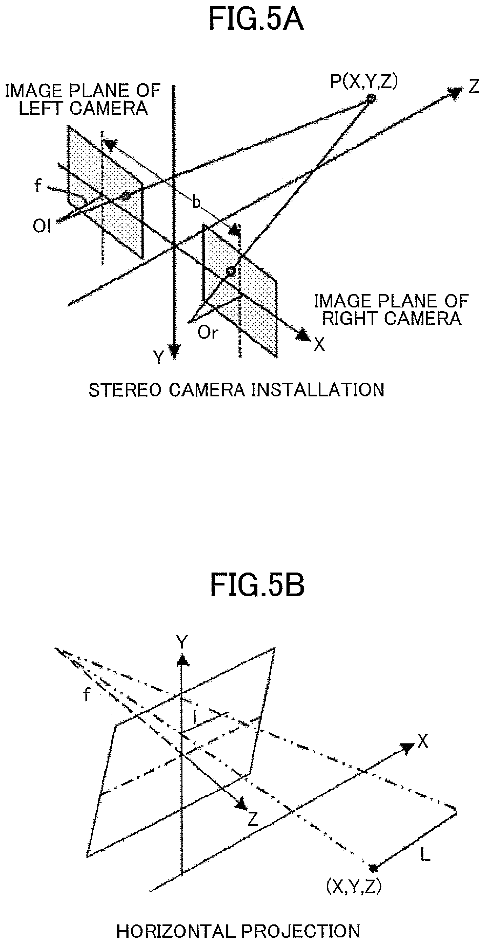

Here the calculation is described in detail by referring to FIGS. 5A and 5B. FIG. 5A illustrates installation of a stereo camera, and FIG. 5B illustrates vehicle width calculation on the basis of horizontal projection.

In general, if the installation of a stereo camera as well as the distance between the stereo camera and an object being captured by the stereo camera (i.e., the so-called "depth Z") are given, then a disparity value d may be calculated according to the following equation (1) .

$$d = x_r - x_l = f\frac{b}{Z} \qquad (1)$$

In this equation (1), as shown in of FIG. 5A, d refers to the disparity value; $x_r$ and $x_l$ refer to horizontal coordinates of corresponding pixels in right and left images, respectively; f refers to the focal length of each lens; b refers to the base line distance between camera lend centers; and Z refers to the depth of the object P(X,Y,Z).

According to the horizontal projection, i.e., FIG. 5B, it may be understood that a vehicle width range in a disparity map may be calculated by employing the following equation (2).

$$l = \frac{f \times L}{Z + f} = \frac{f \times L}{\dfrac{b \times f}{d} + f} \qquad (2)$$

In this equation (2), d refers to the disparity value; f refers to the length of each lens; b refers to the distance along the base line; Z refers to the depth; L refers to the actual width of a vehicle (i.e., an object captured by the stereo camera); and 1 refers to the pixel-based width of the vehicle in a corresponding image (i.e., the vehicle width range in a corresponding disparity map).

Therefore, from the above, it is obvious that if the width of a vehicle in the real world is given, then it is possible to calculate the pixel-based width of the vehicle in the corresponding image.

For example, it is possible to define the maximum and minimum actual width values of a vehicle in the real world as 2 and 1 meters, respectively. In this case, if a disparity value is given, then the vehicle width range in a corresponding disparity map may be calculated on the basis of the equation (2).

In what follows, an example is given for illustration of how to calculate the symmetry of a column with respect to a width located within a vehicle width range in an image, related to the column.

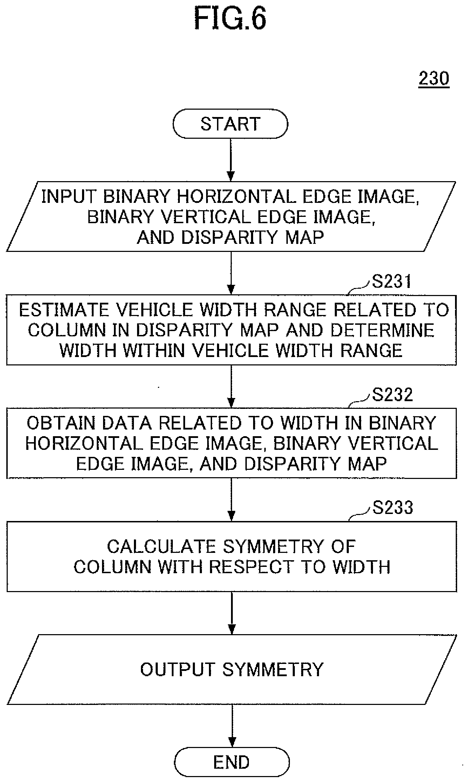

FIG. 6 is a flowchart of a process 230 of calculating the symmetry of a column with respect to a width located within a vehicle width range, related to the column. This process 230 may be applied to STEP S230 shown in FIG. 3.

As shown in FIG. 6, first, a binary horizontal edge image, a binary vertical edge image, and a disparity map are input.

In STEP S231, a vehicle width range in the disparity map, related to the column is estimated (calculated), and a width located within the vehicle width range is determined. The estimated vehicle width range and the determined width located within the vehicle width range are used for calculating the symmetry of the column with respect to the width later.

In an example, it is possible to determine a representative disparity value of the column. Hereinafter, for the sake of convenience, the horizontal coordinate of the column is predetermined Xc, and the column is called "column Xc" sometimes. For example, it is possible to calculate the average or median value of the disparity values of the pixels belonging to the column Xc to serve as the representative disparity value. Alternatively, it is possible to calculate the average or median value of the disparity values of the pixels located within a predetermined segment of the column Xc to serve as the representative disparity value.

Next, on the basis of the actual width range of a vehicle in the real world, the parameters of a camera performing photography on the vehicle, and the determined representative disparity value, the vehicle width range (wmin, wmax) in the disparity map is calculated, for example, by employing the equation (2).

After the vehicle width range in the disparity map is calculated, the symmetry of the column Xc with respect to a width W (corresponding to the first width in Claim 1), for example, (wmin+wmax)/2 located within the vehicle width range is calculated.

In another example, if the disparity values of the column Xc are sparsely distributed, i.e., if it is difficult to find a meaningful or representative disparity value, then it is possible to simply select, for example, one tenth of the entire image width to serve as the width with respect to which the symmetry of the column Xc is calculated.

In STEP S232, data related to the width in the binary horizontal edge image, the binary vertical edge image, and the disparity map is obtained by carrying out statistical methods.

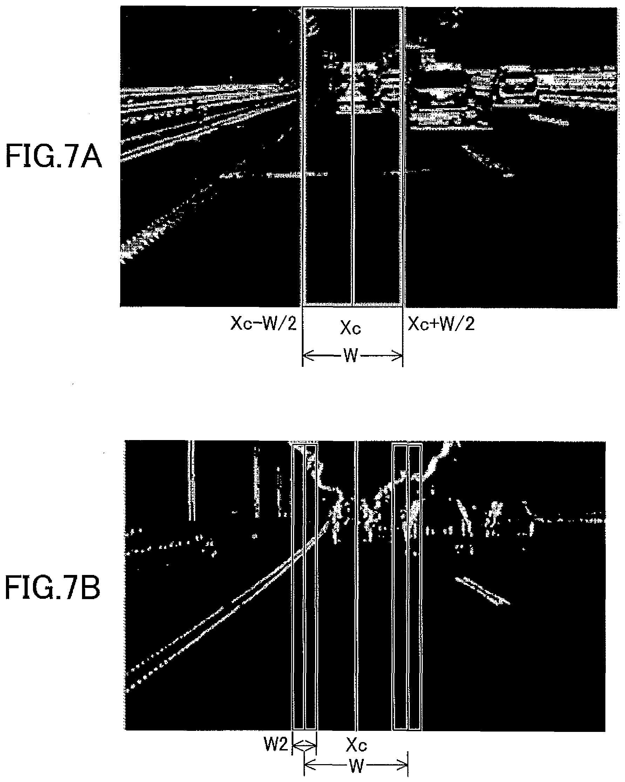

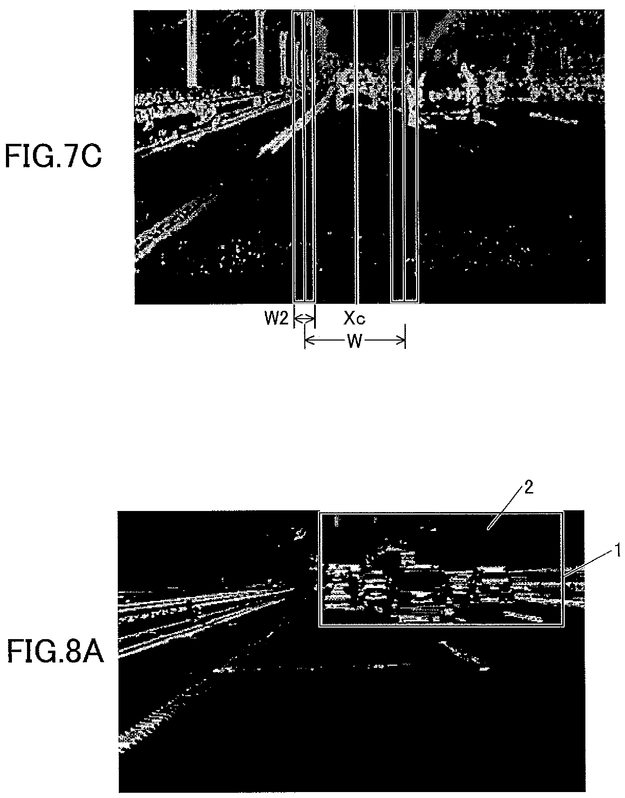

FIGS. 7A, 7B and 7C illustrate data related to the width in the binary horizontal edge image, the binary vertical edge image, and the disparity map respectively obtained by carrying out statistical methods.

In an example, in the binary horizontal edge image, as shown in FIG. 7A, as for the column Xc, the number of edge pixels within a range from Xc-W/2 to Xc+W/2 is obtained. Here it is assumed that the edge pixels within the above range are white ones, the number of them is N, and the number of white edge pixels symmetric with respect to the column Xc is S. In particular, if there are two pixels (X,Y) and (X+Xc,Y), and both of them are white, then these two pixels are symmetric with respect to the column Xc.

In this example, in the binary horizontal edge image, the region-based symmetry $Sym_{horizontal}(Xc,W)$ of the column Xc with respect to the width W may be calculated, for example, by adopting the following equation (3).

$$Sym_{horizontal}(Xc,W) = \frac{S^2}{N} \quad (3)$$

Here, it should be noted that the equation (3) is just an example. That is to say, it is also possible to utilize any other proper approach to calculate the region-based symmetry $Sym_{horizontal}(Xc,W)$ of the column Xc with respect to the width W in the binary horizontal edge image. For example, a simple approach may be $Sym_{horizontal}(Xc,W)=S/N$.

In another example which is not part of the invention, in the binary vertical edge image, as shown in FIG. 7B, in order to calculate the degree of existence of right and left vertical edges of a vehicle in the binary vertical edge image, the number of edge pixels V within each of predetermined two vertical regions (i.e., predetermined right and left vertical regions) located on the two sides (i.e., the right and left sides) of the column Xc is obtained by carrying out statistical methods. As for the predetermined right and left vertical regions, for example, the left vertical region is predetermined in such a way that the center of the left vertical region is a column whose horizontal coordinate is Xc-W/2 (here W is also called a "first width") and the width of the left vertical region is W2 (here W2 is also called a "second width"), and the right vertical region is predetermined in the same way. Here it should be noted that the degree of existence of the right or left vertical edge of a vehicle in the binary vertical edge image is represented by the number of edge pixels V obtained above.

In particular, as shown FIG. 7B, on the two sides (i.e., the right and left sides) of the column Xc, two vertical regions are selected. As for the left vertical region, its center is a column whose horizontal coordinate is Xc-W/2, and as for the right vertical region, its center is a column whose horizontal coordinate is Xc+W/2. Furthermore, the width of each of the two vertical regions is, for example, 5 pixels (i.e., the second width W2). The number of white pixels with respect to the second width W2 is obtained by carrying out statistical methods, and is expressed as V.

In an instance, the number of white pixels V or its normalized value is used to represent the existence probability of a vertical edge (corresponding to a probable vertical edge of a vehicle) within the corresponding vertical region.

In particular, in an instance, the existence probability P(vertical) of a vertical edge (corresponding to a probable vertical edge of a vehicle) within the corresponding vertical region in the binary vertical edge image may be expressed by the following equation (4).

$$P(vertical) = \frac{V}{W} \qquad (4)$$

In still another example, in order to calculate the degree of existence of symmetric right and left edges of a possible vehicle in the binary vertical edge image, the disparity map is utilized, as shown in FIG. 7C. In the disparity map, two vertical regions on the two sides of the column Xc are selected as done in the above example. After that, the number of pixels symmetric with respect to the column Xc within the two vertical regions is obtained, and is expressed as D. The symmetry of the right and left vertical edges of a possible vehicle in the disparity map is calculated on the basis of the number of symmetrical edge pixels D.

In particular, as shown in FIG. 7C, on the two sides (i.e., the right and left sides) of the column Xc, two vertical regions are selected. As for the right vertical region, its center is a column whose horizontal coordinate is Xc+W/2, and its width is, for example, 5 pixels (i.e., the second width W2). As for the left vertical region, its center is a column whose horizontal coordinate is Xc-W/2, and its width is, for example, 5 pixels (i.e., the second width W2) too. The number of white pixels symmetric with respect to the column Xc within the two vertical regions is obtained by carrying out statistics, and is expressed as D.

In an instance, the number of white pixels D or its normalized value (for example, D/W) is used to represent the existence probability of right and left edges symmetric with respect to the column Xc (corresponding to symmetrical right and left edges of a possible vehicle) within the right and left vertical regions.

In particular, in an instance, the existence probability P(d) of right and left vertical edges (corresponding to symmetrical vertical edges of a possible vehicle) within the right and left vertical regions in the disparity map may be expressed by the following equation (5) .

$$P(d) = \frac{D}{W} \qquad (4)$$

Here it should be noted that in the above description, the second width is 5 pixels. However, this is just an example; that is to say, it is also possible to let the second width be another value according to actual needs. Moreover, in the above description, the second width in the binary vertical edge image is equal to that in the disparity map. However, the present invention is not limited to this; in other words, the second width in the binary vertical image may be different from that in the disparity map.

Here, referring to FIG. 6 again; in STEP S233, the symmetry of the column (i.e., the column Xc) with respect to the width (i.e., the width W) is calculated.

On the basis of the data obtained by carrying out statistical methods in STEP S232, i.e., on the basis of the number of white pixels N and the number of white pixels symmetric with respect to the column Xc obtained in the width-related (W-related) region of the binary horizontal edge image, the number of edge pixels V obtained in the binary vertical edge image, and the number of symmetrical edge pixels D obtained in the disparity map, the symmetry of the columns Xc with respect to the width W (expressed as Symmetry(Xc,W)) may be calculated by adopting the following equation (6).

$$Symmetry(Xc,W) = F(N,S,V,D) \qquad (6)$$

In this equation (6), F(N,S,V,D) may have various forms, for example, may within the framework of the invention be expressed as the following equation (7) or (8).

$$F(N,S,V,D) = \frac{S^2}{N} \times \frac{V}{W} \times \frac{D}{W} \quad (7)$$

$$F(N,S,V,D) = w_1 \times \frac{S^2}{N} + w_2 \times \frac{V}{W} + w_3 \times \frac{D}{W} \quad (8)$$

In the equation (8), $w_1$, $w_2$, and $w_3$ refer to weighted factors, and are real numbers within a range of (0,1). Here it should be noted that the value of each of $w_1$, $w_2$, and $w_3$ may be predetermined according to actual needs.

In the equations (7) and (8), W refers to the first width, mainly serves as a normalization factor, and may be replaced by other values.

Here it should be noted that the equations (7) and (8) are just examples for calculating the symmetry of the column with respect to the width. That is to say, it is also possible to adopt any other proper function according to actual needs, for example, a function that is monotonously increasing with respect to S, V, and D, but is monotonously decreasing with respect to N.

In addition, it should be noted that in the examples of calculating the symmetry of the column Xc with respect to the width W, the symmetry is calculated directly based on the number of white pixels N and the number of white pixels symmetric with respect to the columns Xc in the width-related (W-related) region of the binary horizontal edge image, the number of edge pixels V in the binary vertical edge image, and the number of symmetrical edge pixels D in the disparity map. However, this is just an example. Of course, it is also possible to adopt an approach as follows, namely, by utilizing the equation (3), calculating the region-based symmetry of the column Xc with respect to the width W in the binary horizontal edge image (for example, expressed as $Sym_{horizontal}$ (Xc, W)); by utilizing the equation (4), calculating the existence probabilities of vertical edges of a vehicle in the binary vertical edge image (for example, expressed as P(vertical)); by utilizing the equation (5), calculating the existence of right and left vertical edges of a vehicle in the disparity map (for example, expressed as P(d)); after that, on the basis of the calculated $Sym_{horizontal}$ (Xc, W), P (vertical), and P(d), calculating the symmetry of the column Xc with respect to the width W.

Here, referring to FIG. 6 again; after the symmetry of the column with respect to the width is calculated in STEP S233, it is possible to output the calculated symmetry.

Up to here, how to calculate the symmetry of a column with respect to a width has been described in a case where the width is located within a vehicle width range related to the column. Similarly, it is also possible to calculate the symmetry of a column with respect to each of plural widths located within the vehicle width range related to the column. For example, it is possible to calculate the symmetry of a column with respect to each of plural widths (for example, from a minimum width Wwin to a maximum width Wmax) according to a predetermined width interval.

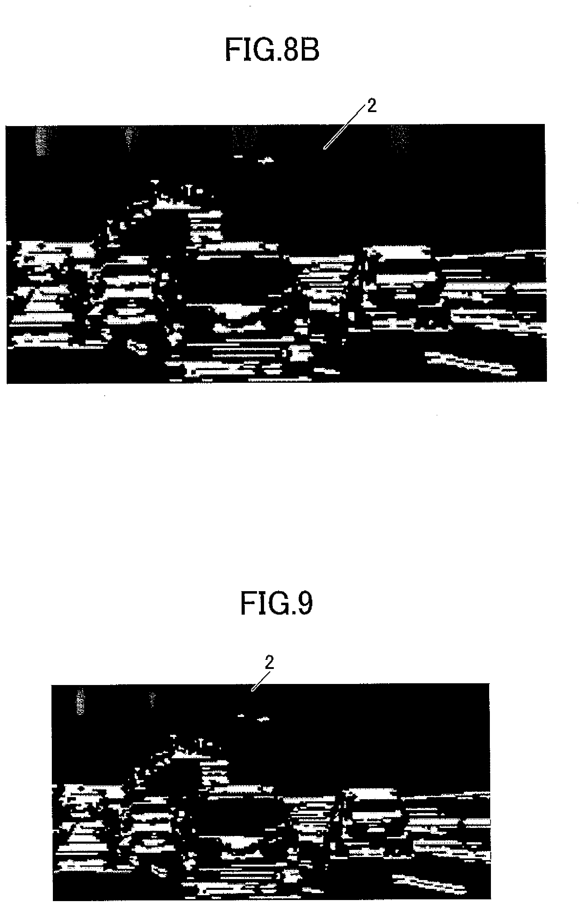

FIGS. 8A and 8B illustrate the symmetries of a column with respect to various widths in a binary horizontal edge image. In FIG. 8A, regarding a region indicated by a rectangle frame 1, symmetry representation indicated by 2 is obtained. As for each point (Xc,W) in the symmetry representation, its horizontal coordinate Xc refers to a column Xc, its vertical coordinate W refers to a related width (a first width), and its gray level refers to a value representing the symmetry of the column Xc with respect to the related width W. The brighter this point is, the higher the symmetry is. FIG. 8B is an enlarged view of the symmetry representation indicated by 2 in FIG. 8A.

In an example, it is also possible to carry out filtering with respect to each value representing symmetry. For example, a predetermined threshold value may be adopted. If a value representing symmetry is less than the predetermined threshold value, then this value is set to 0. Since the symmetry of a vehicle is higher that of other objects in general, by carrying out this kind of filtering, it is possible to remove a column whose symmetry is low, i.e., to retain a column whose symmetry is high. FIG. 9 illustrates a result after carrying out the filtering with respect to each value representing symmetry in FIG. 8B.

Here it should be noted that the so-called "symmetry of a column" may be represented by the symmetry of the column with respect to a width located within a vehicle width range related to the column, or may be represented by the average or median value of values expressing symmetries of the column with respect to plural widths located within a vehicle width range related to the column. From another viewpoint, the symmetry of a column may indicate the probability of the column being the symmetry axis of a corresponding vehicle. As a result, in the follow-on steps, it is possible to detect the corresponding vehicle by determining the symmetry axis of the corresponding vehicle on the basis of the calculated symmetry of the column.

For example, it is possible to calculate, by scanning a binary horizontal edge image, a binary vertical edge image, and a disparity map from left to right, the symmetry of each column according to the symmetry calculation method shown in FIG. 6.

Here referring to FIG. 3 again; after the symmetry of each column is obtained in STEP S230, STEP S240 is carried out.

In STEP S240, a vehicle is detected on the basis of the obtained symmetry of each column.

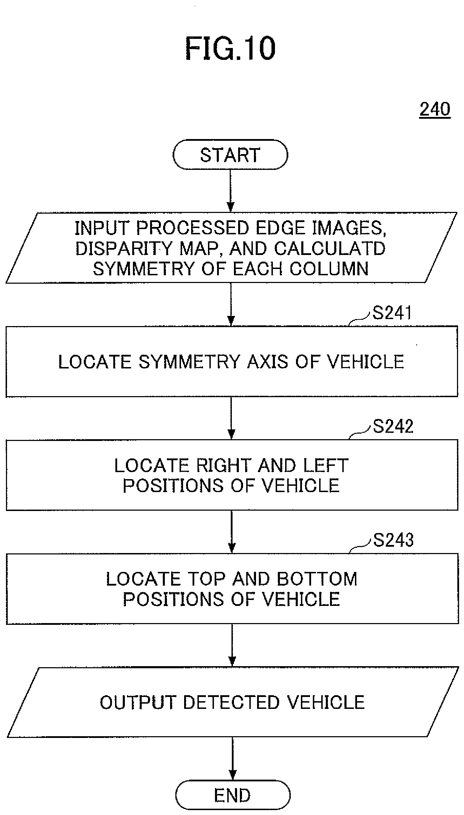

In what follows, a vehicle detection process based on the symmetry of each column is described by referring to FIG. 10. FIG. 10 is a flowchart of a vehicle detection process 240 on the basis of the symmetry of each column.

As shown in FIG. 10, the processed edge images, the disparity map, and the calculated symmetry of each column are input first. Furthermore, preferably, the above-described filtering process is performed on the calculated symmetry of each column so as to improve the accuracy and efficiency of the vehicle detection process.

In STEP S241, the symmetry axis of a vehicle (at least one vehicle) is located (determined) on the basis of the calculated symmetry of each column.

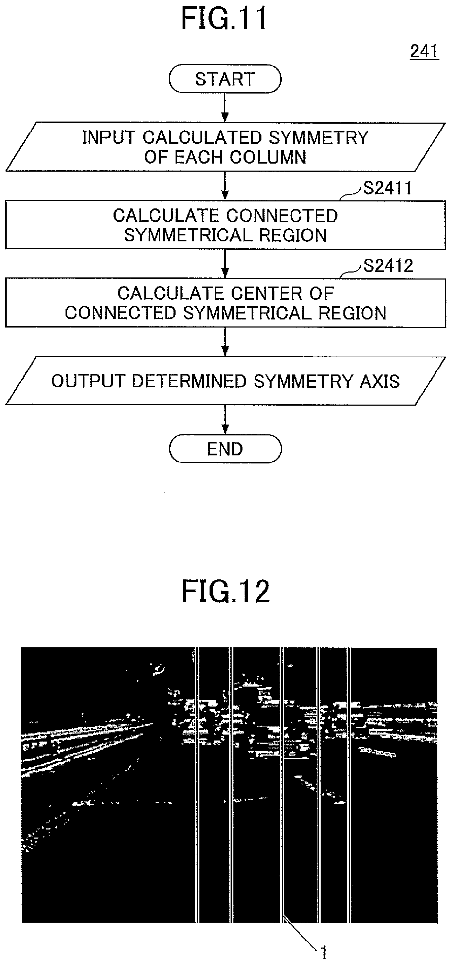

An example of determining the symmetry axis of a vehicle on the basis of the calculated symmetry of each column is given as follows by referring to FIG. 11. FIG. 11 is a flowchart of a process 241 of locating a symmetry axis of a vehicle based on the symmetry of each column.

As shown in FIG. 11, the calculated symmetry of each column is input first. In STEP S2411, on the basis of the symmetry of each column, a connected symmetrical region (at least one connected symmetrical region) is detected. The connected symmetrical region may be defined as a region in which the values representing the symmetries of continuous columns are greater than a predetermined threshold value. For example, it is possible to obtain the connected symmetrical region by searching for the continuous columns from left to right.

After that, in STEP S2412, a column located at the center of each connected symmetrical region is calculated so as to serve as a symmetry axis for output.

FIG. 12 illustrates a result of locating a symmetry axis of a vehicle. In FIG. 12, a vertical line indicated by 1 represents the position of the determined symmetry axis. The position of the determined symmetry axis is considered the position of the central column (the central axis) of a probably existing vehicle.

Here referring to FIG. 10 again; in STEP S242, the right and left positions of the vehicle are located (determined).

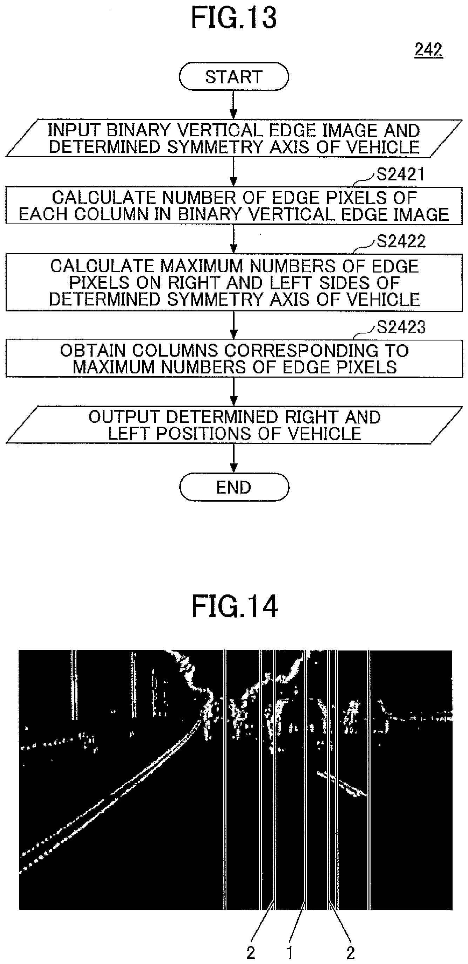

An example of determining the right and left positions of a vehicle is given as follows by referring to FIG. 13. FIG. 13 is a flowchart of a process 242 of locating the right and left positions of a vehicle.

As shown in FIG. 13, a corresponding binary vertical edge image and a determined position of the symmetry axis of a vehicle are input.

In STEP S2421, in the corresponding binary vertical edge image, as for the determined symmetry axis, the number of edge pixels of each column within predetermined ranges on the right and left sides of the determined symmetry axis is obtained.

In STEP S2422, the maximum numbers of edge pixels of columns in the predetermined right and left ranges are calculated.

In STEP S2423, the column having the maximum number of edge pixels in the predetermine left range serves as the left position of the vehicle, and the column having the maximum number of edge pixels in the predetermined right range serves as the right position of the vehicle. In this way, the right and left positions of the vehicle are determined and output.

FIG. 14 illustrates a result of locating the right and left positions of a vehicle. In FIG. 14, the vertical line indicated by 1 refers to the determined symmetry axis of a vehicle, and the vertical lines indicated by 2 refer to the determined right and left positions of the vehicle. The determined right and left positions are considered the boundaries of a probably existing vehicle.

Referring to FIG. 10 again; in STEP S243, the top and bottom positions of the vehicle are located.

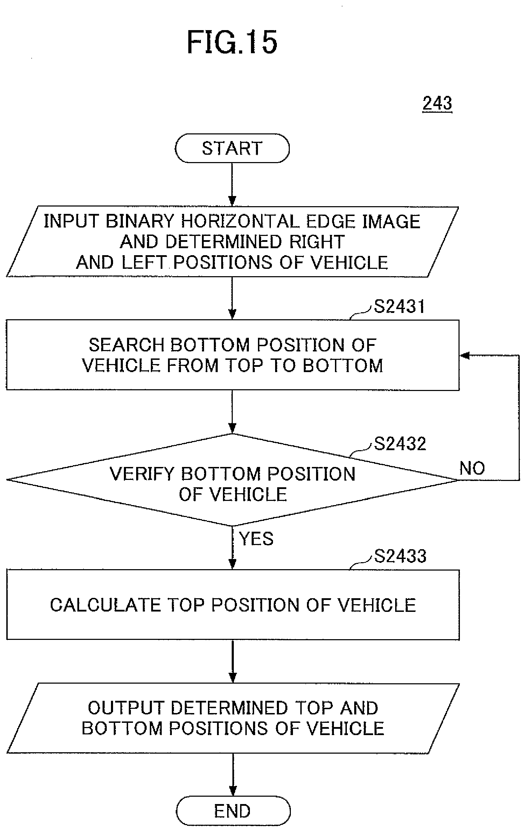

An example of locating the top and bottom positions of a vehicle is given as follows by referring to FIG. 15. FIG. 15 is a flowchart of a process 243 of locating the bottom and top positions of a vehicle.

As shown in FIG. 15, a corresponding binary horizontal edge image and the determined right and left positions of a vehicle are input first.

In STEP S2431, in the corresponding binary horizontal edge image, the number of white pixels of each row located between the determined right and left columns for top to bottom are obtained on the basis of statistical methods. If the number of white pixels of a row is greater than a predetermined threshold value, then this row is initially considered the bottom position of the vehicle.

In STEP S2432, the initially determined bottom position of the vehicle is verified. For example, in an instance, the initially determined bottom position of the vehicle is verified by determining whether there is an edge in the range between the intersection of the initially determined bottom position (i.e., the row initially considered the bottom position) and the determined right and left columns in a corresponding binary vertical edge image as well as whether there is a disparity in the range between the intersections of the initially determined bottom position and the determined right and left columns in a corresponding disparity map. If there is that kind of edge in the corresponding binary vertical edge image and there is that kind of disparity in the corresponding disparity map, then that means the verification succeeded, and then STEP S2433 is carried out; otherwise, that means the verification failed, and then STEP S2431 is carried out again.

In STEP S2433, the top position of the vehicle is obtained on the basis of a predetermined width-to-height ratio of the vehicle. In an instance, the predetermined width-to-height ratio of the vehicle is 1. However, this is just an instance; the present invention is not limited to this. That is to say, it is possible to predetermine one or more different width-to-height ratios according to different kinds of vehicles.

After that, the obtained top and bottom positions of the vehicle are output.

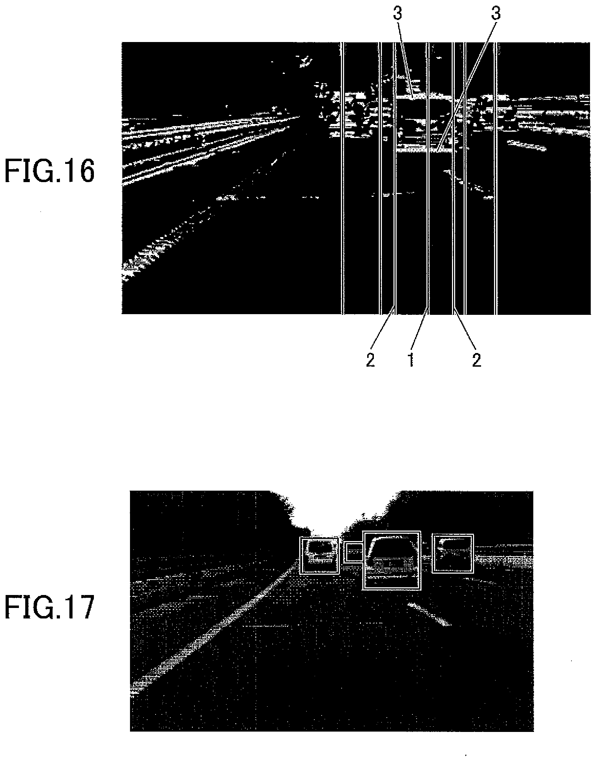

FIG. 16 illustrates a result of locating the bottom and top positions of a vehicle. In FIG. 16, the vertical line indicated by 1 refers to the determined symmetry axis of the vehicle, the vertical lines indicated by 2 refer to the determined right and left positions of the vehicle, and the horizontal lines indicated by 3 refer to the determined top and bottom positions of the vehicle. The determined top and bottom positions are considered the top and bottom boundaries of a probably existing vehicle.

Here referring to FIG. 10 again; after the top and bottom positions of the vehicle are located in STEP S243, it is possible to output the vehicle detection result, and then to end the vehicle detection process.

Here it should be noted that the above-described processes of locating the right and left positions of the vehicle, and locating the top and bottom positions of the vehicle are just examples. In other words, it is possible to adopt any other process to locate the right and left positions of the vehicle, and the top and bottom positions of the vehicle.

For example, after the symmetry axis of the vehicle is initially located, if it is difficult to find suitable right and left positions and/or top and bottom positions of the vehicle on the basis of this symmetry axis, then it is also possible to discard this symmetry axis, or to find another more proper symmetry axis near this symmetry axis. Furthermore, in an instance, in the process of locating the vehicle, it is also possible to further consider other features of the vehicle. For example, when locating the right and left positions of the vehicle, it is also possible to verify whether the determined right and left positions of the vehicle are within a predetermined vehicle width range.

In addition, in an instance, the vehicle detection method may also include a step of carrying out post-processing with regard to the detected vehicle. For example, the post-processing may include filtering out, on the basis of the position of the detected vehicle and a corresponding disparity map, a vehicle whose size and position cannot satisfy a predetermined criterion. For example, it is possible to obtain width and height ranges of the vehicle on the basis of the disparity of the position at which the vehicle is located. If it is found that the width of the detected vehicle is not within the width range or the height of the detected vehicle is not within the height range, then the detected vehicle may be removed. Furthermore, the post-processing may also include verifying whether the variance of the detected vehicle region in the corresponding disparity map satisfies a predetermined criterion. The reason is that, in general, any two of the disparities of a vehicle region in a corresponding disparity map approach each other. That is to say, the variance of the vehicle region in the corresponding disparity map should not be too large.

FIG. 17 illustrates a result of performing post-processing on detected vehicles. In FIG. 17, the detected vehicles are indicated by rectangle frames, respectively.

As a result, by utilizing the above-described vehicle detection method and device, it is possible to more accurately detect a vehicle according to an actual situation because, as for each column, a vehicle width range related to the corresponding column is determined, and the symmetry of the corresponding column is determined on the basis of the vehicle width range related to the corresponding column. In addition, when the symmetry of the corresponding column is calculated, on the basis of the features of a vehicle in a binary horizontal edge image, a binary vertical edge image and a corresponding disparity map, the region-based symmetry in the binary horizontal edge image, the right-and-left vertical edge-based symmetry of a possible vehicle in the corresponding disparity map and the degree of existence of the right and left edges of a vehicle in the binary vertical edge image are comprehensively considered. In this way, it is possible to more properly calculate the symmetry of the corresponding column and to apply the calculated symmetry of the corresponding column into the vehicle detection, so that it is possible to obtain a detection result which is more accurate and is more robust against noise.

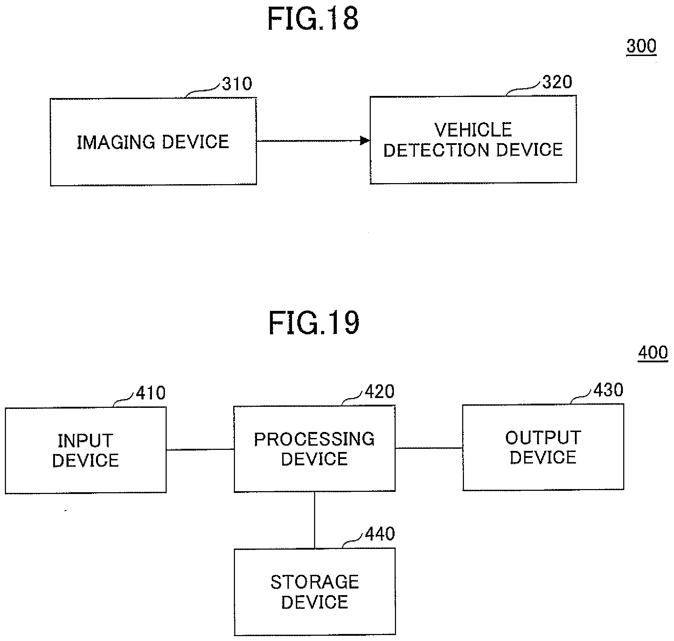

FIG. 18 is a block diagram of a second vehicle detection system 300 according to an embodiment of the present invention.

As shown in FIG. 18, the second vehicle detection system 300 may include an imaging device 310 and a vehicle detection device 320. The imaging device 310 is configured to be installed in a vehicle for obtaining an image of an object. For example, the imaging device 310 may be a single-lens camera, a twin-lens camera, or a multi-lens camera. The vehicle detection device 320 is configured to carrying out analysis with regard to the image obtained by the imaging device 310. Here it should be noted that the vehicle detection device 320 may be achieved by, for example, the vehicle detection device 100 shown in FIG. 2.

FIG. 19 is a block diagram of a third vehicle detection system 400 according to an embodiment of the present invention.

As shown in FIG. 19, the third vehicle detection device 400 may include an input device 410, a processing device 420, an output device 430, and a storage device 440. The input device 410 is configured to input information from the outside, for example, a grayscale image, a disparity map, and parameters of a camera. The input device 410 may be, for example, a keyboard, a mouse, or a remote input device connected to a network. The processing device 420 is configured to achieve the above-described vehicle detection method, or to serve as the above-described vehicle detection device, for example, the vehicle detection device 100 shown in FIG. 2. The processing device 420 may include, for example, a central processing unit (CPU) of a computer or a chip having the same function, and may be connected to, for example, the Internet for remotely transmitting the detected result. The output device 430 is configured to output the detected result to the outside, for example, to a display unit, a printer, or a remote output device connected to a network. The storage device 440 is configured to store data in the vehicle detection process, for example, a binary horizontal edge image, a binary vertical edge image, a disparity map, right and left positions of a vehicle, and top and bottom positions of the vehicle. The storage device 440 may be, for example, a RAM, a ROM, a hard disk, or a semiconductor memory (volatile or nonvolatile).

For example, in the above description, the camera is installed in a vehicle. However, the present invention is not limited to this. That is to say, as long as it is possible to obtain a grayscale image and a corresponding disparity map, the camera may be installed in any object or anywhere, for example, may be installed in a telephone pole near a road.

Furthermore, in the above description, when the symmetry of a column with respect to a width is calculated, the region-based symmetry in a binary horizontal edge image, the right-and-left vertical edge-based symmetry of a possible vehicle in a disparity map and the degree of existence of the right and left edges of a vehicle in a binary vertical edge image are considered. However, instead of the right-and-left vertical edge-based symmetry

In addition, the embodiments of the present invention may be implemented in any convenient form, for example, using dedicated hardware, or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, personal digital assistant, mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

The present application is based on and claims the benefit of priority of Chinese Priority Patent Application No. 201310271915.1 filed on July 1, 2013.

**Claims**

1. A vehicle detection method comprising:

   obtaining (S210) a grayscale image; and
   detecting (S220) horizontal and vertical edges in the grayscale image as well as carrying out binary image processing so as to respectively obtain binary horizontal and vertical edge images in which each edge pixel is represented by one value, and each non-edge pixel is represented by another value, wherein any pixel lying on both a horizontal and a vertical edge is considered to be a non-edge pixel;
   **characterized by**
   obtaining (S210) a disparity map corresponding to the grayscale image; and
   calculating (S230) a symmetry of each column, wherein the symmetry of the corresponding column with respect to a first width (W) located within a vehicle width range wherein calculating (S230) the symmetry of the corresponding column with respect to the first width (W) comprises:

      determining, in the binary horizontal edge image, a first region whose center is the corresponding column and whose width is the first width (W), obtaining a number of edge pixels N in the first region and a number of edge pixels S symmetric with respect to the corresponding column in the first region, and calculating the region-based symmetry in the binary horizontal edge image as the ratio of the number of edges pixels N and the number of edge pixels S symmetric with respect to the corresponding column;

determining, in the binary vertical edge image, two second regions which are on right and left sides of the corresponding column, whose centers are columns whose distances to the corresponding column are a half of the first width (W), and whose widths are a second width (W2), and obtaining a number of edge pixels V in the two second regions and determining the degree of existence of the right and left vertical edges of the vehicle in the binary vertical edge image as the normalized number of edge pixels V;

determining, in the disparity map, two third regions which are on the right and left side of the corresponding column, whose centers are columns whose distances to the corresponding column are a half of the first width (W), and whose widths are the second width, and obtaining a number of edge pixels D symmetric with respect to the corresponding column in the two third regions, wherein, the right-and-left vertical edge-based symmetry of the possible vehicle in the disparity map is calculated as the normalized number of edge pixels D symmetric with respect to the corresponding column;

calculating the symmetry of the corresponding column with respect to the first width (W) as a function of the region-based symmetry in the binary horizontal edge image, the degree of existence of the right and left vertical edges in the binary vertical edge image, and the right-and-left vertical edge-based symmetry in the disparity map;

further **characterized in that**

the method comprises

detecting (S240) the vehicle using a symmetry axis which is located at the center of at least one connected symmetrical region, which is a region of continuous symmetrical columns.

2. The vehicle detection method according to claim 1, wherein:

the symmetry of the corresponding column with respect to the first width (W) is calculated by

$$F(N,S,V,D) = \frac{S^2}{N} \times \frac{V}{W} \times \frac{D}{W}$$

or

$$F(N,S,V,D) = w_1 \times \frac{S^2}{N} + w_2 \times \frac{V}{W} + w_3 \times \frac{D}{W} \, ,$$

wherein, F(N,S,V,D) refers to the symmetry of the corresponding column with respect to the first width (W), W refers to the first width, and $w_1$, $w_2$, and $w_3$ refer to weighted factors, and are real numbers within a range of (0, 1).

3. The vehicle detection method according to claim 1, wherein the first width (W) is obtained by carrying out:

determining a representative disparity of the corresponding column in the disparity map;

calculating the vehicle width range (Wmin, Wmax) in the image based on an actual width range of the vehicle in a real physical world, parameters of a camera for obtaining the grayscale image and the disparity map, and the representative disparity of the corresponding column; and

determining at least one first width (W) within the vehicle width range (Wmin, Wmax) in the image.

4. The vehicle detection method according to claim 1, further comprising:

carrying out alternate processing with respect to the binary horizontal edge image and the binary vertical edge image before calculating the symmetry of each column so as to obtain a first image and a second image, respectively, wherein, the first image is obtained by only retaining pixels that are edge pixels in the binary horizontal edge image and are non-edge pixels in the binary vertical edge image, the second image is obtained by only retaining pixels that are edge pixels in the binary vertical edge image and are non-edge pixels in the binary horizontal edge image, and the first image and the second image serve as a binary horizontal edge image and a binary vertical edge image after the alternate processing, respectively.

5. A vehicle detection method according to claim 1, wherein detecting the vehicle based on the calculated symmetry of each column comprises locating a symmetry axis, and locating the symmetry axis includes:

> determining at least one connected symmetrical region; and
> calculating a center of the at least one connected symmetrical region to serve as the symmetry axis of the vehicle.

6. The vehicle detection method according to claim 5, wherein detecting the vehicle based on the calculated symmetry of each column further comprises locating right and left positions of the vehicle, and locating the right and left positions of the vehicle includes:

> calculating a number of edge pixels of each column within predetermined right and left ranges on right and left sides of the symmetry axis in the binary vertical edge image;
> obtaining a maximum number of edge pixels within the predetermined right range and a maximum number of edge pixels within the predetermined left range; and
> letting a column corresponding to the maximum number of edge pixels within the predetermined right range be the right position of the vehicle, and letting a column corresponding to the maximum number of edge pixels within the predetermined left range be the left position of the vehicle.

7. The vehicle detection method according to claim 6, wherein detecting the vehicle based on the calculated symmetry of each column further comprises locating bottom and top positions of the vehicle, and locating the bottom and top positions of the vehicle includes:

> searching for the bottom position of the vehicle from top to bottom in the binary horizontal edge image based on a number of edge pixels of each row between the right position of the vehicle and the left position of the vehicle in the binary horizontal edge image;
> verifying the search-located bottom position of the vehicle by determining whether there is an edge between a predetermined range between an intersection of the search-located bottom position of the vehicle and the right position of the vehicle and an intersection of the search-located bottom position of the vehicle and the left position of the vehicle in the binary vertical edge image as well as determining whether there is a disparity in a predetermined range between an intersection of the search-located bottom position of the vehicle and the right position of the vehicle and an intersection of the search-located bottom position of the vehicle and the left position of the vehicle in the disparity map; and
> obtaining the top position of the vehicle based on a predetermined width-to-height ratio of the vehicle.

8. The vehicle detection method according to claim 7, wherein detecting the vehicle based on the calculated symmetry of each column further comprises carrying out post-processing with respect to the detected vehicle, and carrying out the post-processing with respect to the detected vehicle includes:

> removing the detected vehicle, whose size and position cannot satisfy a predetermined criterion, based on the position of the detected vehicle and the disparity map; and
> determining whether variance of a region of the detected vehicle in the disparity map is less than a predetermined threshold value.

9. A vehicle detection device (100) comprising:

> a first obtention part (110) configured to obtain a grayscale image; and
> a second obtention part configured to detect horizontal and vertical edges in the grayscale image as well as carrying out binary image processing so as to respectively obtain binary horizontal and vertical edge images in which each edge pixel is represented by one value, and each non-edge pixel is represented by another value, wherein any pixel lying on both a horizontal and a vertical edge is considered to be a non-edge pixel;
> **characterized by**
> the first obtention part (110) being further configured to obtain a disparity map corresponding to the grayscale image; and
> a symmetry calculation part (130) configured to calculate a symmetry of each column, wherein the symmetry of the corresponding column with respect to a first width (W) located within a vehicle width range, wherein the symmetry calculation part (130) is configured to calculate the symmetry of the corresponding column with respect to the first width (W) by:
> determining, in the binary horizontal edge image, a first region whose center is the corresponding column and whose width is the first width (W), obtaining a number of edge pixels N in the first region and a number of edge pixels S symmetric with respect to the corresponding column in the first region, and calculating the region-based symmetry in the binary horizontal edge image as the ratio of the number of edges pixels N and the number of edge pixels S symmetric with respect to the corresponding column;

determining, in the binary vertical edge image, two second regions which are on right and left sides of the corresponding column, whose centers are columns whose distances to the corresponding column are a half of the first width (W), and whose widths are a second width (W2), and obtaining a number of edge pixels V in the two second regions and determining the degree of existence of the right and left vertical edges of the vehicle in the binary vertical edge image as the normalized number of edge pixels V;

determining, in the disparity map, two third regions which are on the right and left side of the corresponding column, whose centers are columns whose distances to the corresponding column are a half of the first width (W), and whose widths are the second width, and obtaining a number of edge pixels D symmetric with respect to the corresponding column in the two third regions, wherein, the right-and-left vertical edge-based symmetry of the possible vehicle in the disparity map is calculated as the normalized number of edge pixels D symmetric with respect to the corresponding column;

calculating the symmetry of the corresponding column with respect to the first width (W) as a function of the region-based symmetry in the binary horizontal edge image, the degree of existence of the right and left vertical edges in the binary vertical edge image, and the right-and-left vertical edge-based symmetry in the disparity map; and

a detection part (140) configured to detect the vehicle using a symmetry axis which is located at the center of at least one connected symmetrical region, which is a region of continuous symmetrical columns.

**Patentansprüche**

1. Fahrzeugerfassungsverfahren, umfassend:

Erhalten (S210) eines Graustufenbilds; und

Erfassen (S220) von horizontalen und vertikalen Kanten in dem Graustufenbild sowie Ausführen von Binärbildverarbeitung, um jeweils binäre horizontale und vertikale Kantenbilder zu erhalten, in denen jedes Kantenpixel durch einen Wert dargestellt ist und jedes Nicht-Kantenpixel durch einen anderen Wert dargestellt ist, wobei jedes Pixel, das sowohl an einer horizontalen als auch einer vertikalen Kante liegt, als ein Nicht-Kantenpixel betrachtet wird;

**gekennzeichnet durch**

Erhalten (S210) einer Disparitätskarte, die dem Graustufenbild entspricht; und

Berechnen (S230) einer Symmetrie jeder Spalte, wobei die Symmetrie der entsprechenden Spalte in Bezug auf eine erste Breite (W), die sich innerhalb eines Fahrzeugbreitenbereichs befindet, ist, wobei ein Berechnen (S230) der Symmetrie der entsprechenden Spalte in Bezug auf die erste Breite (W) Folgendes umfasst:

in dem binären horizontalen Kantenbild Bestimmen eines ersten Bereichs, dessen Mitte die entsprechende Spalte ist und dessen Breite die erste Breite (W) ist, Erhalten einer Anzahl von Kantenpixeln N in dem ersten Bereich und einer Anzahl von Kantenpixeln S, die symmetrisch in Bezug auf die entsprechende Spalte in dem ersten Bereich sind, und Berechnen der bereichsbasierten Symmetrie in dem binären horizontalen Kantenbild als das Verhältnis der Anzahl von Kantenpixeln N und der Anzahl von Kantenpixeln S, die symmetrisch in Bezug auf die entsprechende Spalte sind;

in dem binären vertikalen Kantenbild Bestimmen von zwei zweiten Bereichen, die auf einer rechten und linken Seite der entsprechenden Spalte sind, deren Mitten Spalten sind, deren Abstände zu der entsprechenden Spalte die Hälfte der ersten Breite (W) sind, und deren Breiten eine zweite Breite (W2) sind, und Erhalten einer Anzahl von Kantenpixeln V in den zwei zweiten Bereichen und Bestimmen des Grads des Vorhandenseins der rechten und linken vertikalen Kanten des Fahrzeugs in dem binären vertikalen Kantenbild als die normalisierte Anzahl von Kantenpixeln V;

in der Disparitätskarte Bestimmen von zwei dritten Bereichen, die auf der rechten und linken Seite der entsprechenden Spalte sind, deren Mitten Spalten sind, deren Abstände zur entsprechenden Spalte die Hälfte der ersten Breite (W) sind, und deren Breiten die zweite Breite sind, und Erhalten einer Anzahl von Kantenpixeln D, die symmetrisch in Bezug auf die entsprechende Spalte in den zwei dritten Bereichen sind, wobei die vertikale kantenbasierte Rechts-Links-Symmetrie des möglichen Fahrzeugs in der Disparitätskarte als die normalisierte Anzahl von Kantenpixeln D, die symmetrisch in Bezug auf die entsprechende Spalte sind, berechnet wird;

Berechnen der Symmetrie der entsprechenden Spalte in Bezug auf die erste Breite (W) in Abhängigkeit der bereichsbasierten Symmetrie in dem binären horizontalen Kantenbild, des Grads des Vorhandenseins der rechten und linken vertikalen Kanten in dem binären vertikalen Kantenbild und der vertikalen kantenbasierten Rechts-Links-Symmetrie in der Disparitätskante;

ferner **dadurch** gekennzeichnet, dass

das Verfahren Folgendes umfasst:

Erfassen (S240) des Fahrzeugs unter Verwendung einer Symmetrieachse, die sich in der Mitte mindestens eines verbundenen symmetrischen Bereichs befindet, der ein Bereich von zusammenhängenden symmetrischen Spalten ist.

2. Fahrzeugerfassungsverfahren nach Anspruch 1, wobei:

die Symmetrie der entsprechenden Spalte in Bezug auf die erste Breite (W) berechnet wird durch

$$F(N,S,V,D) = \frac{S^2}{N} \times \frac{V}{W} \times \frac{D}{W}$$

oder

$$F(N,S,V,D) = w_1 \times \frac{S^2}{N} + w_2 \times \frac{V}{W} + w_3 \times \frac{D}{W},$$

wobei sich F(N,S,V,D) auf die Symmetrie der entsprechenden Spalte in Bezug auf die ersten Breite (W) bezieht, W sich auf die erste Breite bezieht und $w_1$, $w_2$ und $w_3$ sich auf Gewichtungsfaktoren beziehen und reelle Zahlen innerhalb eines Bereichs von (0, 1) sind.

3. Fahrzeugerfassungsverfahren nach Anspruch 1, wobei die erste Breite (W) durch Ausführen von Folgendem erhalten wird:

Bestimmen einer repräsentativen Disparität der entsprechenden Spalte in der Disparitätskarte;
Berechnen des Fahrzeugbreitenbereichs ($W_{min}$, $W_{max}$) in dem Bild auf Grundlage eines tatsächlichen Breitenbereichs des Fahrzeugs in einer realen physischen Welt, von Parametern einer Kamera zum Erhalten des Graustufenbilds und der Disparitätskarte und der repräsentativen Disparität der entsprechenden Spalte; und
Bestimmen mindestens einer ersten Breite (W) innerhalb des Fahrzeugbreitenbereichs ($W_{min}$, $W_{max}$) in dem Bild.

4. Fahrzeugerfassungsverfahren nach Anspruch 1, ferner umfassend:
Ausführen von alternativer Verarbeitung in Bezug auf das binäre horizontale Kantenbild und das binäre vertikale Kantenbild vor dem Berechnen der Symmetrie jeder Spalte, um ein erstes Bild bzw. ein zweites Bild zu erhalten, wobei das erste Bild durch nur Beibehalten von Pixeln, die Kantenpixel in dem binären horizontalen Kantenbild sind und Nicht-Kantenpixel in dem binären vertikalen Kantenbild sind, erhalten wird, das zweite Bild durch nur Beibehalten von Pixeln, die Kantenpixel in dem binären vertikalen Kantenbild sind und Nicht-Kantenpixel in dem binären horizontalen Kantenbild sind, erhalten wird und das erste Bild und das zweite Bild als ein binäres horizontales Kantenbild bzw. ein binäres vertikales Kantenbild nach der alternativen Verarbeitung dienen.

5. Fahrzeugerfassungsverfahren nach Anspruch 1, wobei ein Erfassen des Fahrzeugs auf Grundlage der berechneten Symmetrie jeder Spalte ein Lokalisieren einer Symmetrieachse umfasst und Lokalisieren der Symmetrieachse Folgendes beinhaltet:

Bestimmen mindestens eines verbundenen symmetrischen Bereichs; und
Berechnen einer Mitte des mindestens einen verbundenen symmetrischen Bereichs, um als die Symmetrieachse des Fahrzeugs zu dienen.

6. Fahrzeugerfassungsverfahren nach Anspruch 5, wobei ein Erfassen des Fahrzeugs auf Grundlage der berechneten Symmetrie jeder Spalte ferner ein Lokalisieren einer rechten und linken Position des Fahrzeugs umfasst und Lokalisieren der rechten und linken Position des Fahrzeugs Folgendes beinhaltet:

Berechnen einer Anzahl von Kantenpixeln jeder Spalte innerhalb eines vorbestimmten rechten und linken Bereichs auf einer rechten und linken Seite der Symmetrieachse in dem binären vertikalen Kantenbild;

Erhalten einer maximalen Anzahl von Kantenpixeln innerhalb des vorbestimmten rechten Bereichs und einer maximalen Anzahl von Kantenpixeln innerhalb des vorbestimmten linken Bereichs; und

Zulassen, dass eine Spalte, die der maximalen Anzahl von Kantenpixeln innerhalb des vorbestimmten rechten Bereichs entspricht, die rechte Position des Fahrzeugs ist und Zulassen, dass eine Spalte, die der maximalen Anzahl von Kantenpixeln innerhalb des vorbestimmten linken Bereichs entspricht, die linke Position des Fahrzeugs ist.

7. Fahrzeugerfassungsverfahren nach Anspruch 6, wobei ein Erfassen des Fahrzeugs auf Grundlage der berechneten Symmetrie jeder Spalte ferner ein Lokalisieren einer Boden- und Verdeckposition des Fahrzeugs umfasst und Lokalisieren der Boden- und Verdeckposition des Fahrzeugs Folgendes beinhaltet:

Suchen nach der Bodenposition des Fahrzeugs von oben nach unten in dem binären horizontalen Kantenbild auf Grundlage einer Anzahl von Kantenpixeln jeder Zeile zwischen der rechten Position des Fahrzeugs und der linken Position des Fahrzeugs in dem binären horizontalen Kantenbild;

Überprüfen der durch Suche lokalisierten Bodenposition des Fahrzeugs durch Bestimmen, ob eine Kante zwischen einem vorbestimmten Bereich zwischen einem Schnittpunkt der durch Suche lokalisierten Bodenposition des Fahrzeugs und der rechten Position des Fahrzeugs und einem Schnittpunkt der durch Suche lokalisierten Bodenposition des Fahrzeugs und der linken Position des Fahrzeugs in dem binären vertikalen Kantenbild vorliegt, sowie Bestimmen, ob eine Disparität in einem vorbestimmten Bereich zwischen einem Schnittpunkt der durch Suche lokalisierten Bodenposition des Fahrzeugs und der rechten Position des Fahrzeugs und einem Schnittpunkt der durch Suche lokalisierten Bodenposition des Fahrzeugs und der linken Position des Fahrzeugs in der Disparitätskarte vorliegt; und

Erhalten der Verdeckposition des Fahrzeugs auf Grundlage eines vorbestimmten Verhältnisses von Breite zu Höhe des Fahrzeugs.

8. Fahrzeugerfassungsverfahren nach Anspruch 7, wobei ein Erfassen des Fahrzeugs auf Grundlage der berechneten Symmetrie jeder Spalte ferner ein Ausführen von Nachverarbeitung in Bezug auf das erfasste Fahrzeug umfasst und Ausführen der Nachverarbeitung in Bezug auf das erfasste Fahrzeug Folgendes beinhaltet:

Entfernen des erfassten Fahrzeugs, dessen Größe und Position ein vorbestimmtes Kriterium nicht erfüllen kann, auf Grundlage der Position des erfassten Fahrzeugs und der Disparitätskarte; und

Bestimmen, ob Varianz eines Bereichs des erfassten Fahrzeugs in der Disparitätskarte weniger als ein vorbestimmter Schwellwert ist.

9. Fahrzeugerfassungsvorrichtung (100), umfassend:

ein erstes Erhaltungsteil (110), das konfiguriert ist, ein Graustufenbild zu erhalten; und

ein zweites Erhaltungsteil, das konfiguriert ist, horizontale und vertikale Kanten in dem Graustufenbild zu erfassen, sowie Binärbildverarbeitung ausführt, um jeweils binäre horizontale und vertikale Kantenbilder zu erhalten, in denen jedes Kantenpixel durch einen Wert dargestellt ist und jedes Nicht-Kantenpixel durch einen anderen Wert dargestellt ist, wobei ein Pixel, das sowohl an einer horizontalen als auch einer vertikalen Kante liegt, als ein Nicht-Kantenpixel betrachtet wird;

**gekennzeichnet durch**

das erste Erhaltungsteil (110), das ferner konfiguriert ist, eine Disparitätskarte, die dem Graustufenbild entspricht, zu erhalten; und

ein Symmetrieberechnungsteil (130), das konfiguriert ist, eine Symmetrie jeder Spalte zu berechnen, wobei die Symmetrie der entsprechenden Spalte in Bezug auf eine erste Breite (W), die sich innerhalb eines Fahrzeugbreitenbereichs befindet, ist, wobei das Symmetrieberechnungsteil (130) konfiguriert ist, die Symmetrie der entsprechenden Spalte in Bezug auf die erste Breite (W) zu berechnen **durch**:

in dem binären horizontalen Kantenbild Bestimmen eines Bereichs, dessen Mitte die entsprechende Spalte ist und dessen Breite die erste Breite (W) ist, Erhalten einer Anzahl von Kantenpixeln N in dem ersten Bereich und einer Anzahl von Kantenpixeln S, die symmetrisch in Bezug auf die entsprechende Spalte in dem ersten Bereich sind, und Berechnen der bereichsbasierten Symmetrie in dem binären horizontalen Kantenbild als das Verhältnis der Anzahl von Kantenpixeln N und der Anzahl von Kantenpixeln S, die symmetrisch in Bezug auf die entsprechende Spalte sind;

EP 2 821 935 B1

in dem binären vertikalen Kantenbild Bestimmen von zwei zweiten Bereichen, die auf einer rechten und linken Seite der entsprechenden Spalte sind, deren Mitten die Spalten sind, deren Abstände zu der entsprechenden Spalte die Hälfte der ersten Breite (W) sind, und deren Breiten eine zweite Breite (W2) sind, und Erhalten einer Anzahl von Kantenpixeln V in den zwei zweiten Bereichen und Bestimmen des Grads des Vorhandenseins der rechten und linken vertikalen Kanten des Fahrzeugs in dem binären vertikalen Kantenbild als die normalisierte Anzahl von Kantenpixeln V;

in der Disparitätskarte Bestimmen von zwei dritten Bereichen, die auf der rechten und linken Seite der entsprechenden Spalte sind, deren Mitten Spalten sind, deren Abstände zur entsprechenden Spalte die Hälfte der ersten Breite (W) sind, und deren Breiten die zweite Breite sind, und Erhalten einer Anzahl von Kantenpixeln D, die symmetrisch in Bezug auf die entsprechende Spalte in den zwei dritten Bereichen sind, wobei die vertikale kantenbasierte Rechts-Links-Symmetrie des möglichen Fahrzeugs in der Disparitätskarte als die normalisierte Anzahl von Kantenpixeln D, die symmetrisch in Bezug auf die entsprechende Spalte sind, berechnet wird;

Berechnen der Symmetrie der entsprechenden Spalte in Bezug auf die erste Breite (W) in Abhängigkeit der bereichsbasierten Symmetrie in dem binären horizontalen Kantenbild, des Grads des Vorhandenseins der rechten und linken vertikalen Kanten in dem binären vertikalen Kantenbild und der vertikalen kantenbasierten Rechts-Links-Symmetrie in der Disparitätskarte; und

ein Erfassungsteil (140), das konfiguriert ist, das Fahrzeug unter Verwendung einer Symmetrieachse zu erfassen, die sich in der Mitte mindestens eines verbundenen symmetrischen Bereichs befindet, der ein Bereich von zusammenhängenden symmetrischen Spalten ist.


**Revendications**

1. Procédé de détection de véhicule comprenant :

   l'obtention (S210) d'une image en niveaux de gris ; et
   la détection (S220) de contours horizontaux et verticaux dans l'image en niveaux de gris ainsi que la réalisation d'un traitement d'image binaire de manière à respectivement obtenir des images de contours horizontaux et verticaux dans lesquelles chaque pixel de contour est représenté par une valeur, et chaque pixel hors contour est représenté par une autre valeur, tout pixel étant situé à la fois sur un contour horizontal et un contour vertical étant considéré comme étant un pixel hors contour ;
   **caractérisé par**
   l'obtention (S210) d'une carte de disparités correspondant à l'image en niveaux de gris ; et
   le calcul (S230) d'une symétrie de chaque colonne, la symétrie de la colonne correspondante par rapport à une première largeur (W) située dans une plage de largeur de véhicule, le calcul (S230) de la symétrie de la colonne correspondante par rapport à la première largeur (W) comprenant :

      la détermination, dans l'image de contour horizontal binaire, d'une première région dont le centre est la colonne correspondante et dont la largeur est la première largeur (W), l'obtention d'un nombre de pixels de contour N dans la première région et d'un nombre de pixels de contour S symétriques par rapport à la colonne correspondante dans la première région, et le calcul de la symétrie par région dans l'image de contour horizontal binaire en tant que rapport du nombre de pixels de contour N et du nombre de pixels de contour S symétriques par rapport à la colonne correspondante ;
      la détermination, dans l'image de contour vertical binaire, de deux deuxièmes régions qui sont situées sur des côtés droit et gauche de la colonne correspondante, dont les centres sont des colonnes dont les distances à la colonne correspondante représentent une moitié de la première largeur (W), et dont les largeurs représentent une deuxième largeur (W2), et l'obtention d'un nombre de pixels de contour V dans les deux deuxièmes régions et la détermination du degré d'existence des contours verticaux droit et gauche du véhicule dans l'image de contour vertical binaire en tant que nombre normalisé de pixels de contour V ;
      la détermination, dans la carte de disparités, de deux troisièmes régions qui sont situées sur le côté droit et gauche de la colonne correspondante, dont les centres sont des colonnes dont les distances à la colonne correspondante représentent une moitié de la première largeur (W), et dont les largeurs représentent la deuxième largeur, et l'obtention d'un nombre de pixels de contour D symétriques par rapport à la colonne correspondante dans les deux troisièmes régions, la symétrie par contour vertical droit et gauche de l'éventuel véhicule dans la carte de disparités étant calculée en tant que nombre normalisé de pixels de contour D symétriques par rapport à la colonne correspondante ;
      le calcul de la symétrie de la colonne correspondante par rapport à la première largeur (W) en fonction de la symétrie par région dans l'image de contour horizontal binaire, le degré d'existence des contours verticaux droit et gauche dans l'image de contour vertical binaire, et la symétrie par contour vertical droit et gauche dans la carte de disparités ;

**caractérisé en outre en ce que**

le procédé comprend la détection (S240) du véhicule à l'aide d'un axe de symétrie qui est situé au centre d'au moins une région symétrique connectée, qui est une région de colonnes symétriques continues.

2. Procédé de détection de véhicule selon la revendication 1, dans lequel :

la symétrie de la colonne correspondante par rapport à la première largeur (W) est calculée par

$$F(N,S,V,D) = \frac{S^2}{N} \times \frac{V}{W} \times \frac{D}{W}$$

ou

$$F(N,S,V,D) = w_1 \times \frac{S^2}{N} + w_2 \times \frac{V}{W} + w_3 \times \frac{D}{W},$$

où, F(N,S,V,D) se rapporte à la symétrie de la colonne correspondante par rapport à la première largeur (W), W se rapporte à la première largeur, et $w_1$, $w_2$ et $w_3$ se rapportent à des facteurs de pondération, et représentent des nombres réels dans une plage de (0,1).

3. Procédé de détection de véhicule selon la revendication 1, dans lequel la première largeur (W) est obtenue par la réalisation de :

la détermination d'une disparité représentative de la colonne correspondante dans la carte de disparités ;

le calcul de la plage de largeur de véhicule (W$_{min}$, W$_{max}$) dans l'image en fonction d'une plage de largeur réelle du véhicule dans un monde physique réel, de paramètres d'un appareil de prise de vues permettant d'obtenir l'image en niveaux de gris et la carte de disparités, et la disparité représentative de la colonne correspondante ; et

la détermination d'au moins une première largeur (W) dans la plage de largeur du véhicule (W$_{min}$, w$_{max}$) dans l'image.

4. Procédé de détection de véhicule selon la revendication 1, comprenant en outre :

la réalisation d'un traitement alternatif par rapport à l'image de contour horizontal binaire et l'image de contour vertical binaire avant le calcul de la symétrie de chaque colonne de manière à obtenir une première image et une deuxième image, respectivement, la première image étant obtenue seulement par la conservation de pixels qui sont des pixels de contour dans l'image de contour horizontal binaire et sont des pixels hors contour dans l'image de contour vertical binaire, la deuxième image étant obtenue seulement par la conservation de pixels qui sont des pixels de contour dans l'image de contour vertical binaire et sont des pixels hors contour dans l'image de contour horizontal binaire, et la première image et la deuxième image servent d'image de contour horizontal binaire et d'image de contour vertical binaire après le traitement alternatif, respectivement.

5. Procédé de détection de véhicule selon la revendication 1, dans lequel la détection du véhicule en fonction de la symétrie calculée de chaque colonne comprend la localisation d'un axe de symétrie, et la localisation de l'axe de symétrie comprend :

la détermination d'au moins une région symétrique connectée ; et

le calcul d'un centre de l'au moins une région symétrique connectée pour servir d'axe de symétrie du véhicule.

6. Procédé de détection de véhicule selon la revendication 5, dans lequel la détection du véhicule en fonction de la symétrie calculée de chaque colonne comprend en outre la localisation de positions droite et gauche du véhicule, et la localisation des positions droite et gauche du véhicule comprend :

le calcul d'un nombre de pixels de contour de chaque colonne dans des plages droite et gauche prédéterminées sur des côtés droite et gauche de l'axe de symétrie dans l'image de contour vertical binaire ;

l'obtention d'un nombre maximal de pixels de contour dans la plage droite prédéterminée et d'un nombre maximal de pixels de contour dans la plage gauche prédéterminée ; et

le fait de permettre à une colonne correspondant au nombre maximal de pixels de contour dans la plage droite prédéterminée d'être la position de droite du véhicule, et le fait de permettre à une colonne correspondant au nombre maximal de pixels de contour dans la plage de gauche prédéterminée d'être la position de gauche du véhicule.

7. Procédé de détection de véhicule selon la revendication 6, dans lequel la détection du véhicule en fonction de la symétrie calculée de chaque colonne comprend en outre la localisation de positions inférieure et supérieure du véhicule, et la localisation des positions inférieure et supérieure du véhicule comprend :

la recherche de la position inférieure du véhicule de haut en bas dans l'image de contour horizontal binaire en fonction d'un nombre de pixels de contour de chaque rangée entre la position de droite du véhicule et la position de gauche du véhicule dans l'image de contour horizontal binaire ;

la vérification de la position inférieure localisée par recherche du véhicule par la détermination de savoir s'il existe un contour entre une plage prédéterminée entre une intersection de la position inférieure localisée par recherche du véhicule et de la position de droite du véhicule et une intersection de la position inférieure localisée par recherche du véhicule et de la position de gauche du véhicule dans l'image de contour vertical binaire ainsi que la détermination de savoir s'il existe une disparité dans une plage prédéterminée entre une intersection de la position inférieure localisée par recherche du véhicule et la position de droite du véhicule et une intersection de la position inférieure localisée par recherche du véhicule et la position de gauche du véhicule dans la carte de disparités ; et

l'obtention de la position supérieure du véhicule en fonction d'un rapport largeur/hauteur prédéterminé du véhicule.

8. Procédé de détection de véhicule selon la revendication 7, dans lequel la détection du véhicule en fonction de la symétrie calculée de chaque colonne comprend en outre la réalisation d'un post-traitement par rapport au véhicule détecté, et la réalisation du post-traitement par rapport au véhicule détecté comprend :

le retrait du véhicule détecté, dont la taille et la position ne peuvent pas satisfaire à un critère prédéterminé, en fonction de la position du véhicule détecté et de la carte de disparités ; et

la détermination de savoir si une variance d'une région du véhicule détecté dans la carte de disparités est inférieure à une valeur seuil prédéterminée.

9. Dispositif de détection de véhicule (100) comprenant :

une première partie d'obtention (110) conçue pour obtenir une image en niveaux de gris ; et

une deuxième partie d'obtention conçue pour détecter des contours horizontaux et verticaux dans l'image en niveaux de gris ainsi que la réalisation d'un traitement d'image binaire de manière à respectivement obtenir des images de contours horizontaux et verticaux dans lesquelles chaque pixel de contour est représenté par une valeur, et chaque pixel hors contour est représenté par une autre valeur, tout pixel étant situé à la fois sur un contour horizontal et un contour vertical étant considéré comme étant un pixel hors contour ;

**caractérisé par**

la première partie d'obtention (110) étant en outre conçue pour obtenir une carte de disparités correspondant à l'image en niveaux de gris ; et

une partie de calcul de symétrie (130) conçue pour calculer une symétrie de chaque colonne, la symétrie de la colonne correspondante par rapport à une première largeur (W) située à l'intérieur d'une plage de largeur de véhicule, la partie de calcul de symétrie (130) étant conçue pour calculer la symétrie de la colonne correspondante par rapport à la première largeur (W) par :

la détermination, dans l'image de contour horizontal binaire, d'une première région dont le centre est la colonne correspondante et dont la largeur est la première largeur (W), l'obtention d'un nombre de pixels de contour N dans la première région et d'un nombre de pixels de contour S symétriques par rapport à la colonne correspondante dans la première région, et le calcul de la symétrie par région dans l'image de contour horizontal binaire comme rapport du nombre de pixels de contour N et du nombre de pixels de contour S symétriques par rapport à la colonne correspondante ;

la détermination, dans l'image de contour vertical binaire, de deux deuxièmes régions qui sont situées sur des côtés droit et gauche de la colonne correspondante, dont les centres sont des colonnes dont les distances à la colonne correspondante représentent une moitié de la première largeur (W), et dont les largeurs représentent une deuxième largeur (W2), et l'obtention d'un nombre de pixels de contour V dans les deux deuxièmes régions et la détermination du degré d'existence des contours verticaux droit et gauche du véhicule dans l'image de contour vertical binaire en tant que nombre normalisé de pixels de contour V ;

la détermination, dans la carte de disparités, de deux troisièmes régions qui sont situées sur le côté droit et gauche de la colonne correspondante, dont les centres sont des colonnes dont les distances à la colonne correspondante représentent une moitié de la première largeur (W), et dont les largeurs représentent la deuxième largeur, et l'obtention d'un nombre de pixels de contour D symétriques par rapport à la colonne correspondante dans les deux troisièmes régions, la symétrie par contour vertical droit et gauche de l'éventuel véhicule dans la carte de disparités étant calculée en tant que nombre normalisé de pixels de contour D symétriques par rapport à la colonne correspondante ;

le calcul de la symétrie de la colonne correspondante par rapport à la première largeur (W) en fonction de la symétrie par région dans l'image de contour horizontal binaire, du degré d'existence des contours verticaux droit et gauche dans l'image de contour vertical binaire, et de la symétrie par contour vertical droit et gauche dans la carte de disparités ; et

une partie de détection (140) conçue pour détecter le véhicule à l'aide d'un axe de symétrie qui est situé au centre d'au moins une région symétrique connectée, qui est une région de colonnes symétriques continues.

# FIG.1

10

GRAYSCALE
IMAGE AND
DISPARITY MAP
→
VEHICLE
DETECTION
DEVICE
⟋100
→
DETECTED
VEHICLE

# FIG.2

100

FIRST
OBTENTION PART
⟋110

SECOND
OBTENTION PART
⟋120

SYMMETRY
CALCULATION
PART
⟋130

DETECTION
PART
⟋140

EP 2 821 935 B1

# FIG.3

<u>200</u>

```
        ┌─────────────┐
        │    START    │
        └─────────────┘
               │
               │           ╭─S210
               ▼
┌──────────────────────────────────┐
│       OBTAIN GRAYSCALE           │
│    IMAGE AND DISPARITY MAP        │
└──────────────────────────────────┘
               │
               │           ╭─S220
               ▼
┌──────────────────────────────────┐
│     OBTAIN BINARY HORIZONTAL     │
│    AND VERTICAL EDGE IMAGES       │
└──────────────────────────────────┘
               │
               │           ╭─S230
               ▼
┌──────────────────────────────────┐
│   CALCULATE SYMMETRY OF EACH     │
│     COLUMN BASED ON BINARY       │
│      HORIZONTAL EDGE IMAGE,      │
│   BINARY VERTICAL EDGE IMAGE,    │
│       AND DISPARITY MAP          │
└──────────────────────────────────┘
               │
               │           ╭─S240
               ▼
┌──────────────────────────────────┐
│     DETECT VEHICLE BASED ON      │
│      CALCULATED SYMMETRY         │
│        OF EACH COLUMN            │
└──────────────────────────────────┘
               │
               ▼
        ┌─────────────┐
        │     END     │
        └─────────────┘
```

# FIG.4

(a) GRAYSCALE IMAGE

(b) HORIZONTAL EDGE IMAGE

(c) VERTICAL EDGE IMAGE

(d) BINARY HORIZONTAL EDGE IMAGE

(e) BINARY VERTICAL EDGE IMAGE

(f) BINARY HORIZONTAL EDGE IMAGE
AFTER ALTERNATE PROCESSING

(g) BINARY VERTICAL EDGE IMAGE
AFTER ALTERNATE PROCESSING

# FIG.5A

IMAGE PLANE OF
LEFT CAMERA

P(X,Y,Z)

Z

f

Ol

b

IMAGE PLANE OF
RIGHT CAMERA

Or

X

Y

STEREO CAMERA INSTALLATION

# FIG.5B

Y

f

l

X

Z

L

(X,Y,Z)

HORIZONTAL PROJECTION

# FIG.6

230

```
        ┌─────────────┐
        │    START    │
        └─────────────┘
               │
               ▼
   ╱─────────────────────────────────────╱
  ╱  INPUT BINARY HORIZONTAL EDGE IMAGE, ╱
 ╱       BINARY VERTICAL EDGE IMAGE,    ╱
╱          AND DISPARITY MAP           ╱
╱─────────────────────────────────────╱
               │
               │              ⁄S231
               ▼
 ┌───────────────────────────────────────┐
 │ ESTIMATE VEHICLE WIDTH RANGE RELATED TO│
 │ COLUMN IN DISPARITY MAP AND DETERMINE  │
 │   WIDTH WITHIN VEHICLE WIDTH RANGE     │
 └───────────────────────────────────────┘
               │
               │              ⁄S232
               ▼
 ┌───────────────────────────────────────┐
 │  OBTAIN DATA RELATED TO WIDTH IN BINARY│
 │  HORIZONTAL EDGE IMAGE, BINARY VERTICAL│
 │    EDGE IMAGE, AND DISPARITY MAP       │
 └───────────────────────────────────────┘
               │
               │              ⁄S233
               ▼
 ┌───────────────────────────────────────┐
 │       CALCULATE SYMMETRY OF           │
 │   COLUMN WITH RESPECT TO WIDTH        │
 └───────────────────────────────────────┘
               │
               ▼
   ╱─────────────────────────────────────╱
  ╱         OUTPUT SYMMETRY              ╱
 ╱                                      ╱
╱─────────────────────────────────────╱
               │
               ▼
        ┌─────────────┐
        │     END     │
        └─────────────┘
```

FIG.7A

$X_C-W/2$ | $X_C$ | $X_C+W/2$

|←— W —→|

FIG.7B

W2 |←→| $X_C$

|←— W —→|

FIG.7C

FIG.8A

# FIG.8B

# FIG.9

# FIG.10

240

START

INPUT PROCESSED EDGE IMAGES, DISPARITY MAP, AND CALCULATD SYMMETRY OF EACH COLUMN

S241

LOCATE SYMMETRY AXIS OF VEHICLE

S242

LOCATE RIGHT AND LEFT POSITIONS OF VEHICLE

S243

LOCATE TOP AND BOTTOM POSITIONS OF VEHICLE

OUTPUT DETECTED VEHICLE

END

# FIG.11

241

```
        ( START )
            │
            ▼
┌─────────────────────────┐
│  INPUT CALCULATED SYMMETRY │
│     OF EACH COLUMN        │
└─────────────────────────┘
            │
            ▼         ╭S2411
┌─────────────────────────┐
│    CALCULATE CONNECTED    │
│    SYMMETRICAL REGION     │
└─────────────────────────┘
            │
            ▼         ╭S2412
┌─────────────────────────┐
│     CALCULATE CENTER OF    │
│ CONNECTED SYMMETRICAL REGION │
└─────────────────────────┘
            │
            ▼
┌─────────────────────────┐
│  OUTPUT DETERMINED SYMMETRY AXIS │
└─────────────────────────┘
            │
            ▼
        ( END )
```

# FIG.12

# FIG.13

242

START

INPUT BINARY VERTICAL EDGE IMAGE AND
DETERMINED SYMMETRY AXIS OF VEHICLE

S2421

CALCULATE NUMBER OF EDGE PIXELS OF
EACH COLUMN IN BINARY VERTICAL EDGE IMAGE

S2422

CALCULATE MAXIMUM NUMBERS OF EDGE
PIXELS ON RIGHT AND LEFT SIDES OF
DETERMINED SYMMETRY AXIS OF VEHICLE

S2423

OBTAIN COLUMNS CORRESPONDING TO
MAXIMUM NUMBERS OF EDGE PIXELS

OUTPUT DETERMINED RIGHT AND
LEFT POSITIONS OF VEHICLE

END

# FIG.14

2     1     2

# FIG.15

243

```
                    ( START )
                        │
                        ▼
  ╱ INPUT BINARY HORIZONTAL EDGE IMAGE ╱
 ╱      AND DETERMINED RIGHT          ╱
╱    AND LEFT POSITIONS OF VEHICLE   ╱
                        │
                        │        S2431
                        ▼
  ┌──────────────────────────────────┐
  │    SEARCH BOTTOM POSITION OF      │◄───┐
  │   VEHICLE FROM TOP TO BOTTOM      │    │
  └──────────────────────────────────┘    │
                        │                   │
                        ▼        S2432       │
            ◇──────────────────────◇   NO    │
             ◇  VERIFY BOTTOM POSITION ◇─────┘
              ◇     OF VEHICLE       ◇
                ◇──────────────────◇
                        │ YES
                        │        S2433
                        ▼
  ┌──────────────────────────────────┐
  │   CALCULATE TOP POSITION OF VEHICLE │
  └──────────────────────────────────┘
                        │
                        ▼
   ╱ OUTPUT DETERMINED TOP AND      ╱
  ╱ BOTTOM POSITIONS OF VEHICLE    ╱
                        │
                        ▼
                    ( END )
```

FIG.16

FIG.17

# FIG.18

300

IMAGING DEVICE — 310

→

VEHICLE DETECTION DEVICE — 320

# FIG.19

400

INPUT DEVICE — 410

PROCESSING DEVICE — 420

OUTPUT DEVICE — 430

STORAGE DEVICE — 440

EP 2 821 935 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090110286 A1
- US 6842531 B2
- US 7227893 B1
- CN 201310271915

### Non-patent literature cited in the description

- Multi-resolution vehicle detection using artificial version. **BROGGI A et al.** INTELLIGENT VEHICLES SYMPOSIUM, 2004, IEEE PARMA, ITALY JUNE 14-17, 2004. IEEE, 14 June 2004, 310-314
- SYMMETRY-BASED RECOGNITION OF VEHICLES REARS. **KUEHNLE A ED ; CALDERARA SIMONE et al.** PATTERN RECOGNITION LETTERS. ELSEVIER, 01 April 1991, vol. 12, 249-258
- **CHUNG-HEE LEE.** Stereo vision-based vehicle detection using a road feature and disparity histogram. *Optical Engineering,* 01 February 2011, vol. 50 (2), ISSN 0091-3286, 027004
- **MICHAEL E. SOBEL.** Asymptotic Confidence Intervals for Indirect Effects in Structural Equation Models. *Sociological Methodology,* 1982
- **N. OTSU.** A Threshold Selection Method from Gray-level Histograms. *Automatica,* 1975